(19) **Europäisches Patentamt**
**European Patent Office**
**Office européen des brevets**

(11) **EP 4 357 831 A1**

(12) **EUROPEAN PATENT APPLICATION**
published in accordance with Art. 153(4) EPC

(43) Date of publication:
**24.04.2024 Bulletin 2024/17**

(21) Application number: **22848371.5**

(22) Date of filing: **20.07.2022**

(51) International Patent Classification (IPC):
**G02B 13/00** (2006.01)    **G02B 13/18** (2006.01)
**H04N 23/00** (2023.01)

(52) Cooperative Patent Classification (CPC):
**G02B 7/10; G02B 13/00; G02B 13/18; G03B 30/00;**
**H04N 23/55; H04N 23/57**

(86) International application number:
**PCT/CN2022/106809**

(87) International publication number:
**WO 2023/005766 (02.02.2023 Gazette 2023/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.07.2021 CN 202110872362**

(71) Applicant: **Huawei Technologies Co., Ltd.**
**Shenzhen, Guangdong 518129 (CN)**

(72) Inventors:
• **ZHANG, Kaiyuan**
  **Shenzhen, Guangdong 518129 (CN)**
• **HSU, Yun Chiang**
  **Shenzhen, Guangdong 518129 (CN)**
• **JIA, Yuanlin**
  **Shenzhen, Guangdong 518129 (CN)**
• **ZHOU, Shaopan**
  **Shenzhen, Guangdong 518129 (CN)**
• **JIN, Wenjia**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **CAMERA LENS, CAMERA MODULE, AND ELECTRONIC DEVICE**

(57)    This application provides a camera lens, a camera module, and an electronic device. Lenses of an optical system of the camera lens are divided into two groups, and focusing of the optical system is implemented by moving one group of lenses. In this way, high imaging quality of a primary camera lens in a case in which a focus distance is infinity can be ensured and imaging quality in a case in which the focus distance is a macro distance can be improved without adding an additional wide-angle lens or a dedicated macro lens and without increasing surface process complexity and manufacturing difficulty of the primary camera lens. In this way, two lens groups with focal powers are optimized, to find, in different combinations, a conjugate image with better imaging quality at different focus distances. In this way, imaging resolution effect in a case in which the focus distance is the macro distance is significantly improved while imaging quality in a case in which the focus distance is infinity is ensured. The camera module and the electronic device that include the camera lens can achieve same effect.

EP 4 357 831 A1

FIG. 1A

## Description

This application claims priority to Chinese Patent Application No. 202110872362.X, filed with the China National Intellectual Property Administration on July 30, 2021, and entitled "CAMERA LENS, CAMERA MODULE, AND ELECTRONIC DEVICE", which is incorporated herein by reference in its entirety.

## TECHNICAL FIELD

This application relates to the photographing field, and in particular, to a camera lens, a camera module including the camera lens, and an electronic device including the camera module.

## BACKGROUND

In recent years, as electronic devices are increasingly widely used, a requirement for photographing quality of an electronic device is increasingly high. Therefore, a higher requirement is imposed on imaging quality of photographing of a multi-focus-length electronic device. A mobile phone is used as an example. Generally, the mobile phone includes a primary camera lens and a front facing lens. The primary camera lens is the most commonly used lens of the mobile phone. A lens that is enabled by default when a user turns on the mobile phone is the primary camera lens. Therefore, there is a requirement on imaging quality of the primary camera lens in each scenario. Typically, in addition to a high requirement on imaging quality in a case in which a focus distance is infinity, there is also a corresponding requirement on imaging quality in a case in which a focus distance is a macro distance. Therefore, to ensure high imaging quality in a case in which the focus distance is infinity and improve imaging quality in a case in which the focus distance is the macro distance without increasing surface process complexity and manufacturing difficulty of the primary camera lens becomes one of the main problems that the main camera lens needs to face.

To resolve the foregoing problem, most existing primary camera lenses of mobile phones use image plane focusing to compensate for a defocusing distance generated when a focus distance changes. The image plane focusing is implemented in the following two manners. In a first image plane focusing manner, all lenses of the primary camera lens are integrated into a lens unit, and an optical sensor and a light filter are integrated into a fastened sensing unit. A focus adjustment motor of the primary camera lens controls the lens unit to move relative to the sensing unit along an optical axis, to implement the image plane focusing. This image plane focusing manner is a focusing manner implemented by most primary camera lenses. In a second image plane focusing manner, all the lenses of the primary camera lens are integrated into a fastened lens unit, and the optical sensor and the light filter are integrated into a sensing unit. The focus adjustment motor of the primary camera lens drives the sensing unit to move relative to the lens unit along the optical axis, to implement the image plane focusing. However, the image plane focusing implemented in the foregoing two manners cannot effectively compensate for astigmatism generated when the focus distance changes. Once astigmatism cannot be compensated, image quality resolution of the primary camera lens is reduced, resulting in reduced imaging quality.

To resolve the foregoing problem, some mobile phones use an independent macro lens to be applied to a photographing scenario in which a focus distance is a macro distance. However, such a macro lens generally does not have a photographing capability in a case in which the focus distance is infinity. In addition, when a wide-angle lens or a dedicated macro lens is used to implement macro photographing, a lens needs to be added to the mobile phone, thereby occupying space of the mobile phone and increasing costs.

## SUMMARY

In view of this, an objective of this application is to provide a camera lens. This can ensure high imaging quality of a primary camera lens in a case in which a focus distance is infinity and can improve imaging quality in a case in which the focus distance is a macro distance without adding an additional wide-angle lens or a dedicated macro lens and without increasing surface process complexity and manufacturing difficulty of the primary camera lens. In this way, two lens groups with focal powers are optimized, to find, in different combinations, a conjugate image with better imaging quality at different focus distances. In this way, imaging resolution effect in a case in which the focus distance is the macro distance is significantly improved while imaging quality in a case in which the focus distance is infinity is ensured. Another objective of this application is to provide a camera module including the camera lens and an electronic device including the camera module. The camera module and the electronic device have same effect.

To achieve the foregoing objective, this application uses the following technical solutions.

According to a first aspect, this application provides the following camera lens, where the camera lens includes a first group of lenses and a second group of lenses that are sequentially arranged along an optical axis direction from an object side to an image side, the first group of lenses can move along the optical axis direction, and the second group of lenses are fastened. In a process in which a focus distance of the camera lens is switched from infinity to a minimum macro distance, the first group of lenses move towards the object side along the optical axis direction, and a moving stroke $\triangle$ of the first group of lenses and a total track length TTL of the camera lens meet $\triangle/\text{TTL}\leq0.2$. The total track length TTL of the camera lens and a maximum half image height IMH of the camera lens meet $0.5\leq\text{TTL/IMH}\leq2$.

Therefore, a value of $\triangle/\text{TTL}$ of an optical system of the camera lens in this application is limited, so that a focus adjustment burden of a focus adjustment motor can be reduced while a field of view and image quality are ensured. In addition, a value of TTL/IMH of the optical system of the camera lens in this application is limited, so that the camera lens in this application is used as the primary camera lens in a case in which the camera lens in this application has better image quality.

In a possible implementation of the first aspect, the camera lens has N lenses, the first group of lenses include N1 lenses, the second group of lenses include N2 lenses, $7\leq N\leq10$, $4\leq N1\leq7$, and $1\leq N2\leq4$.

Therefore, a quantity of lenses in the optical system of the camera lens in this application is limited to a specific range, so that on a premise that it is ensured that the optical system of the camera lens in this application has a good field of view and image quality, a thickness of the electronic device is not excessively large when the electronic device such as a mobile phone is used.

According to a possible implementation of the first aspect, an effective focal length EFL of the camera lens and the maximum half image height IMH of the camera lens meet $1\leq\text{EFL/IMH}\leq2$.

Therefore, EFL/IMH of the optical system of the camera lens in this application is limited, to further ensure that the camera lens in this application is used as the primary camera lens when the camera lens has better image quality.

In a possible implementation of the first aspect, the first group of lenses have a positive focal power, and an effective focal length EFL1 of the first group of lenses and the effective focal length EFL of the camera lens meet $0.5\leq\text{EFL1/EFL}\leq2$.

Therefore, EFL 1/EFL of the camera lens in this application is limited, so that a focal power of the entire optical system can be effectively allocated, thereby helping construct the optical system of the camera lens.

According to a possible implementation of the first aspect, a first lens most close to the object side in the first group of lenses has a positive focal power, the first group of lenses further include a second lens adjacent to the first lens, a part close to an optical axis of an object side surface of the second lens protrudes towards the object side, and a part close to an optical axis of an image side surface of the second lens recesses towards the object side.

Therefore, focal powers and surface types of some lenses are limited. This helps implement soft and smooth propagation of a light ray in the camera lens.

In a possible implementation according to the first aspect, a part close to an optical axis of an object side surface of one of two lenses most close to the image side in the first group of lenses protrudes towards the object side.

Therefore, the surface types of the some lenses are limited. This helps implement softer and smoother propagation of the light ray in the camera lens.

According to a possible implementation of the first aspect, an F number F# of the camera lens meets $\text{F\#}\leq3.5$.

Therefore, an upper limit of the F number of the optical system of the camera lens in this application is limited, thereby ensuring imaging performance of the camera lens in this application.

According to a possible implementation of the first aspect, a maximum value D1 of maximum effective diameters of lenses in the first group of lenses and a minimum value D2 of maximum effective diameters of lenses in the second group of lenses meet $1\leq\text{D2/D1}\leq3$.

Therefore, D2/D 1 of the optical system of the camera lens in this application is limited, so that the optical system of the camera lens is constructed, and the optical system of the camera lens is easy to process.

In a possible implementation of the first aspect, a lens of the camera lens is made of optical plastic or optical glass.

Therefore, the optical system of the camera lens can be constructed by using a material with a relatively high cost-effectiveness.

According to a second aspect, this application provides the following camera module, including a photosensitive element and the camera lens according to any one of the foregoing technical solutions, where the photosensitive element is located on an image side of the camera lens, the camera lens is configured to receive a light ray reflected by a photographed object and project the light ray to the photosensitive element, and the photosensitive element is configured to convert the light ray into an image signal.

Therefore, the camera module including the camera lens according to this application can achieve same beneficial effect as the camera lens.

According to a third aspect, this application provides the following electronic device, including a housing and the camera module described in the foregoing technical solutions, where the camera module is mounted on the housing.

Therefore, the electronic device including the camera module according to this application can achieve same beneficial effect as the foregoing camera module.

These aspects and other aspects of this application are more concise and more comprehensive in descriptions of the following (a plurality of) embodiments.

**BRIEF DESCRIPTION OF DRAWINGS**

Accompanying drawings included in this specification and constituting a part of this specification and this specification jointly show example embodiments, features, and aspects of this application, and are intended to explain principles of this application.

FIG. 1A is a schematic diagram of an optical system of a camera lens according to a first embodiment of this application;
FIG. 1B is a spherical chromatic aberration diagram of the optical system of the camera lens in FIG. 1A;
FIG. 1C is an astigmatism diagram of the optical system of the camera lens in FIG. 1A;
FIG. 1D is a distortion diagram of the optical system of the camera lens in FIG. 1A;
FIG. 2A is a schematic diagram of an optical system of a camera lens according to a second embodiment of this application;
FIG. 2B is a spherical chromatic aberration diagram of the optical system of the camera lens in FIG. 2A;
FIG. 2C is an astigmatism diagram of the optical system of the camera lens in FIG. 2A;
FIG. 2D is a distortion diagram of the optical system of the camera lens in FIG. 2A;
FIG. 3A is a schematic diagram of an optical system of a camera lens according to a third embodiment of this application;
FIG. 3B is a spherical chromatic aberration diagram of the optical system of the camera lens in FIG. 3A;
FIG. 3C is an astigmatism diagram of the optical system of the camera lens in FIG. 3A;
FIG. 3D is a distortion diagram of the optical system of the camera lens in FIG. 3A;
FIG. 4A is a schematic diagram of an optical system of a camera lens according to a fourth embodiment of this application;
FIG. 4B is a spherical chromatic aberration diagram of the optical system of the camera lens in FIG. 4A;
FIG. 4C is an astigmatism diagram of the optical system of the camera lens in FIG. 4A;
FIG. 4D is a distortion diagram of the optical system of the camera lens in FIG. 4A;
FIG. 5A is a schematic diagram of an optical system of a camera lens according to a fifth embodiment of this application;
FIG. 5B is a spherical chromatic aberration diagram of the optical system of the camera lens in FIG. 5A;
FIG. 5C is an astigmatism diagram of the optical system of the camera lens in FIG. 5A;
FIG. 5D is a distortion diagram of the optical system of the camera lens in FIG. 5A;
FIG. 6A is a schematic diagram of an optical system of a camera lens according to a sixth embodiment of this application;
FIG. 6B is a spherical chromatic aberration diagram of the optical system of the camera lens in FIG. 6A;
FIG. 6C is an astigmatism diagram of the optical system of the camera lens in FIG. 6A; and
FIG. 6D is a distortion diagram of the optical system of the camera lens in FIG. 6A.

Description of drawing marks

G1: First group of lenses; G2: Second group of lenses;
1: First lens; 2: Second lens 3: Third lens; 4: Fourth lens: 5: Fifth lens; 6: Sixth lens; 7: Seventh lens; 8: Eighth lens;
9: Ninth lens; 10: Tenth lens;
L: Light filter; P: Image plane; O: Optical axis.

**DESCRIPTION OF EMBODIMENTS**

The following describes various example embodiments, features, and aspects of this application in detail with reference to the accompanying drawings. Identical reference numerals in the accompanying drawings indicate elements that have same or similar functions. Although various aspects of embodiments are illustrated in the accompanying drawing, the accompanying drawings are not necessarily drawn in proportion unless otherwise specified.
A specific term "example" herein means "used as an example, embodiment or illustration". Any embodiment described as "exemplary" is not necessarily explained as being superior or better than other embodiments.
In addition, to better describe this application, numerous specific details are provided in the following specific embodiments. A person skilled in the art should understand that this application can also be implemented without some specific details. In some examples, methods, means, and elements well known by a person skilled in the art are not described in detail, to highlight the main purpose of this application.

It should be noted that, in this application, unless otherwise specified, an "axial direction" refers to a direction along an optical axis of a lens, an "object side" refers to a side on which a photographed object is located by using a camera lens as a reference, and an "image side" refers to a side on which an image formed by the photographed object passing through a lens is located (or a side on which an image plane is located) by using the camera lens as the reference.

In this application, unless otherwise specified, for meanings of specific terms, refer to the following descriptions.

An "F number" of the camera lens is a relative value obtained by calculating a ratio of a focal length of the camera lens to a light transmission diameter of the camera lens, and is represented by "F#". A smaller F number indicates a larger amount of light entering an aperture within a same unit time. A larger F number indicates a smaller amount of light entering the aperture within the same unit time.

An "effective focal length" of the camera lens is a distance from a principal point of the camera lens to a focal point on an optical axis, and is represented by "EFL". An "effective focal length" of a first group of lenses is a distance from a principal point of the first group of lenses to a focal point on an optical axis, and is represented by "EFL1". An "effective focal length" of a second group of lenses is a distance from a principal point of the second group of lenses to a focal point on an optical axis, and is represented by "EFL2".

A "total track length" of the camera lens is a distance from an object side surface of a lens most close to an object side of the camera lens to an image plane on an optical axis, and is represented by "TTL".

A "maximum half image height" of the camera lens is a maximum radius of an imaging circle on the image plane, and is represented by "IMH".

A "positive focal power" means that a lens or a lens group has a positive focal length, so that the lens or the lens group can converge light.

A "negative focal power" means that a lens or a lens group has a negative focal length, so that the lens or the lens group can diverge light.

An "object plane" is a plane where an imaged object is located.

An "image plane" is a plane where an image of an imaged object is located.

An "object side" is a side of the camera lens close to the object plane.

An "image side" is a side of the camera lens close to the image plane.

A "focus distance" of the camera lens is a distance from the object plane to the image plane on the optical axis. The focus distance being infinity refers to a distance from the object plane to the image plane on the optical axis when the camera lens implements focusing in a state in which an object distance is infinity. The focus distance being a minimum macro distance refers to a distance from the object plane to the image plane on the optical axis when the camera lens implements focusing in a state in which an object distance is a minimum macro distance.

The following describes in detail specific technical solutions of this application.

To facilitate understanding of a zoom camera lens in this application, an application scenario of the camera lens provided in this application is first described. The camera lens provided in this embodiment of this application is mainly used in a camera module of a mobile terminal. The mobile terminal may be a portable terminal device such as a mobile phone, a tablet computer, a laptop computer, a monitor, or an in-vehicle device. The camera lens may be configured to photograph and record an image. A photographing scenario of the camera lens includes various complex and diversified photographing application scenarios, for example, different scenarios such as an indoor scenario, an outdoor scenario, a person scenario, and an environment scenario. A mobile phone is used as an example. The camera lens of the camera module is mounted on a housing of the mobile phone, and a photosensitive element is fastened in the housing. During use, a light ray passes through a camera lens and is irradiated to the photosensitive element, and the photosensitive element converts an optical signal into an electrical signal and performs imaging, to implement photographing. A camera lens in the conventional technology cannot balance two different photographing modes: infinity mode and macro mode. Therefore, an embodiment of this application provides the following camera lens that can zoom.

Specifically, based on a large quantity of tests and detections performed by the inventor, to achieve the objective of this application, the following specific solutions are obtained. The camera lens includes a first group of lenses and a second group of lenses that are sequentially arranged along an optical axis direction from an object side to an image side, the first group of lenses can move along the optical axis direction, and the second group of lenses are fastened. In a process in which a focus distance of the camera lens is switched from infinity to a minimum macro distance, the first group of lenses move towards the object side along the optical axis direction. A moving stroke $\triangle$ of the first group of lenses and a total track length TTL of the camera lens meet $\triangle/TTL \leq 02$. The total track length TTL of the camera lens and a maximum half image height IMH of the camera lens meet $0.5 \leq TTL/IMH \leq 2$. Further, the camera lens has N lenses, the first group of lenses include N1 lenses, the second group of lenses include N2 lenses, $7 \leq N \leq 10$, $4 \leq N1 \leq 7$, and $1 \leq N2 \leq 4$. Further, an effective focal length EFL of the camera lens and the maximum half image height IMH of the camera lens meet $1 \leq EFL/IMH \leq 2$. Further, the first group of lenses have a positive focal power, and an effective focal length EFL1 of the first group of lenses and the effective focal length EFL of the camera lens meet $0.5 \leq EFL1/EFL \leq 2$. Further, a first lens most close to the object side in the first group of lenses has a positive focal power, the first group of lenses further include a second lens adjacent to the first lens, a part close to an optical axis of an object side surface of the second lens protrudes towards the object side, and a part close to an optical axis of an image side surface of the second lens recesses towards the object side. Further, a part close to an optical axis of an object side surface of one of two lenses most close to the image side in the first group of lenses protrudes towards the object side. Further, an F number F# of the camera lens meets F#≤3.5. Further, a maximum value D1 of maximum effective diameters of lenses in the first group of lenses and a minimum value D2 of maximum effective diameters of lenses in the second group of lenses meet 1≤D2/D1≤3. Further, a lens of the camera lens is made of optical plastic or optical glass. In addition, this application further provides the following camera module. The camera module includes a photosensitive element and a camera lens using the foregoing solution. The photosensitive element is located on an image side of the camera lens. The camera lens is configured to receive a light ray reflected by a photographed object and project the light ray to the photosensitive element, and the photosensitive element is configured to convert the light ray into an image signal. This application further provides the following electronic device. The electronic device includes a housing and the foregoing camera module, and the camera module is mounted on the housing.

The following describes a specific structure of a camera lens according to a first embodiment of this application with reference to the accompanying drawings in this specification.

(The camera lens according to the first embodiment of this application is used).

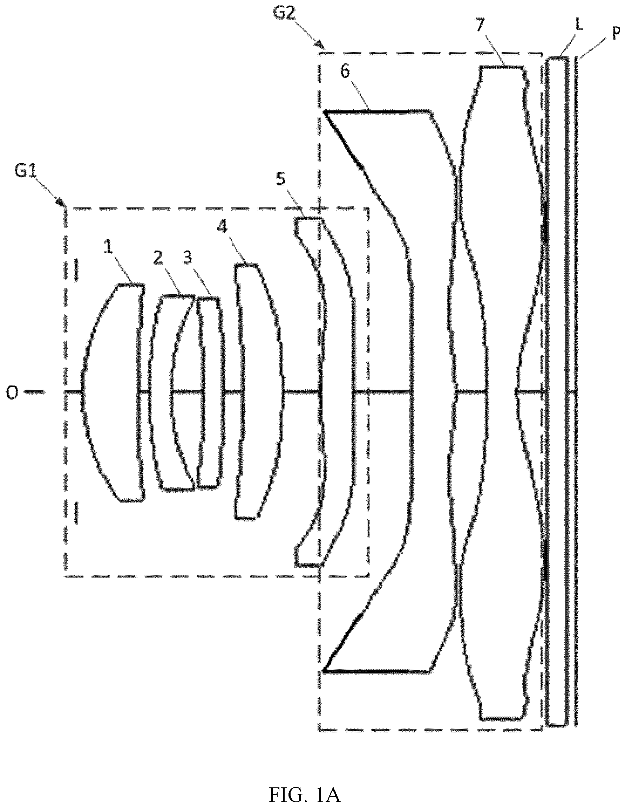

As shown in FIG. 1A, the camera lens according to the first embodiment of this application includes a total of seven lenses, a light filter L, and an image plane P. All lenses may be made of optical plastic. These lenses are a first lens 1, a second lens 2, a third lens 3, a fourth lens 4, a fifth lens 5, a sixth lens 6, and a seventh lens 7 that are sequentially arranged from an object side to an image side. The first lens 1, the second lens 2, the third lens 3, the fourth lens 4, and the fifth lens 5 are grouped into a first group of lenses G1, and the sixth lens 6 and the seventh lens 7 are grouped into a second group of lenses G2. The first group of lenses G1 can move relative to the image plane P of the camera lens, and the second group of lenses G2 are fastened relative to the image plane P. In this way, when the camera lens switches from focusing in a case in which a focus distance is infinity to focusing in a case in which the focus distance is a minimum macro distance, the first group of lenses G1 move along an optical axis O relative to the image plane P (move towards an object side), and the second group of lenses G2 remain fastened relative to the image plane P.

In this embodiment, when the camera lens implements focusing in a case in which the focus distance is infinity, an effective focal length EFL of the camera lens (an optical system including the lenses in the figure) is 6.3 mm, an F number F# of the camera lens is 2.1, and a total track length TTL of the camera lens is 7 mm. When the camera lens implements focusing in a case in which the focus distance is a minimum macro distance, the effective focal length of the camera lens EFL is 6.04 mm, the F number F# of the camera lens is 2.1, and the total track length TTL of the camera lens is 7.24 mm.

Further, in this embodiment, in a process in which the camera lens switches from focusing in a case in which the focus distance is infinity to focusing in a case in which the focus distance is the minimum macro distance, a distance △ (that is, a focusing stroke) that the first group of lenses G1 move upward relative to the image plane P is 0.24 mm, a ratio △/TTL of the focusing stroke △ to the total track length TTL of the camera lens when the camera lens implements focusing in a case in which the focus distance is infinity is 0.034.

Further, in this embodiment, a maximum half image height IMH of the camera lens is 4.64 mm. When the camera lens implements focusing in a case in which the focus distance is infinity, a ratio TTL/IMH of the total track length TTL of the camera lens to the maximum half image height IMH is 1.51. In addition, when the camera lens implements focusing in which the focus distance is infinity, a ratio EFL/IMH of the effective focal length of the camera lens to the maximum half image height IMH is 1.36.

Further, in this embodiment, a focal power of the first group of lenses G1 is positive, a focal power of the second group of lenses G2 is negative, an effective focal length EFL1 of the first group of lenses G1 is 5.65 mm, and an effective focal length EFL2 of the second group of lenses G2 is -6.17 mm. Therefore, a ratio EFL1/EFL of the effective focal length EFL 1 of the first group of lenses G1 to the effective focal length EFL of the camera lens when focusing is implemented in a case in which the focus distance of the camera lens is infinity is 0.9. More specifically, a focal power of the first lens 1 is positive, a focal power of the second lens 2 is negative, a focal power of the third lens 3 is negative, a focal power of the fourth lens 4 is positive, a focal power of the fifth lens 5 is positive, a focal power of the sixth lens 6 is negative, and a focal power of the seventh lens 7 is negative. In addition, a part (a central part) that is of an object side surface of the second lens 2 and that is close to the optical axis O protrudes towards an object side. A part (a central part) that is of an image side surface of the second lens 2 and that is close to the optical axis O recesses towards the object side. Apart (a central part) that is close to the optical axis O and that is of an object side surface of a lens (that is, the fifth lens 5) most close to an image side in the first group of lenses G1 protrudes towards the object side.

Further, in this embodiment, a maximum value D1 of maximum effective diameters of all lenses in the first group of lenses G1 is 4.89 mm, a minimum value D2 of maximum effective diameters of all lenses in the second group of lenses G2 is 8.74 mm, and D2/D1=1.79.

The following describes surface types and related parameters of all lenses and the light filter L.

First, fundamental plane type parameters of the optical system of the camera lens according to the first embodiment of this application are recorded in the following Table 1A. In Table 1A, "surface number" is a surface corresponding to each optical component in the optical system. "Surface type" indicates a shape of a surface, where Sphere indicates a spherical surface, and Asphere indicates an aspheric surface. When "surface type" is Asphere, a shape parameter of the surface is calculated according to the following formula 1. "R" indicates a curvature radius of a surface. "Th" indicates an interplane axial thickness of an optical component (for example, a lens). "Nd" indicates a refractive index of a material. "Vd" indicates an Abbe figure of a material. "SA" indicates a radial radius. In addition, corresponding inf in each parameter indicates infinity.

**[Table 1A]**

| Surface number | Surface type | R (mm) | Th (mm) | Nd | Vd | SA (mm) |
|---|---|---|---|---|---|---|
| Object plane | Sphere | inf | inf | | | 1.562 |
| 1S1 | Asphere | 2.5 | 0.784506 | 1.544919 | 55.9299 | 1.518437 |
| 1S2 | Asphere | 19.13893 | 0.16068 | | | 1.43759 |
| 2S1 | Asphere | 5.965824 | 0.314127 | 1.670746 | 19.2383 | 1.361673 |
| 2S2 | Asphere | 3.15331 | 0.435848 | | | 1.299668 |
| 3S1 | Asphere | 190.691 | 0.28 | 1.670746 | 19.2383 | 1.2 |
| 3S2 | Asphere | 26.48588 | 0.286614 | | | 1.33 |
| 4S1 | Asphere | 175.9283 | 0.561911 | 1.544919 | 55.9299 | 1.619644 |
| 4S2 | Asphere | -11.5192 | 0.549522 | | | 1.78477 |
| 5S1 | Asphere | 5.096244 | 0.468531 | 1.567655 | 37.3171 | 2.191966 |
| 5S2 | Asphere | 12.25428 | 0.829283 | | | 2.446226 |
| 6S1 | Asphere | -16.9631 | 0.609549 | 1.544919 | 55.9299 | 3.0454 |
| 6S2 | Asphere | -3.89235 | 0.457231 | | | 3.950573 |
| 7S1 | Asphere | -14.4308 | 0.422572 | 1.537421 | 55.896 | 4.369239 |
| 7S2 | Asphere | 2.14E+00 | 0.437555 | | | 4.580111 |
| LS1 | Sphere | inf | 0.28 | 1.5168 | 64.17 | 4.649199 |
| LS2 | Sphere | inf | 0.122071 | | | 4.683156 |
| Image plane P | Sphere | inf | 0 | | | 4.70649 |

An aspheric coefficient of each lens is recorded in the following Table 1B, and data in Table 1B is a high-order term coefficient of an aspheric surface whose surface type is Asphere in Table 1A. A surface number of an aspheric surface in Table 1B corresponds to a surface number in Table 1A. This formula can be used to determine a surface type of an aspheric surface. Without the high-order term coefficient, the aspheric surface type cannot be determined. All aspheric surface types may be limited by using the following aspheric surface formula:

$$z = \frac{cr^2}{1+\sqrt{1-Kc^2r^2}} + A_4r^4 + A_6r^6 + A_8r^8 + ... + A_{30}r^{30} \quad \text{(Formula 1)}$$

z is a vector height of the aspheric surface, r is a radial coordinate of the aspheric surface, c is a spherical curvature of a vertex of the aspheric surface, K is a conic constant, and A4, A6, A8, ..., and A30 are aspheric coefficients. In the formula, an independent variable is the radial coordinate r of the aspheric surface, and 0<r<SA. For a specific value of SA, refer to Table 1A. The spherical curvature of the vertex c is 1/R. For a specific value of R, refer to Table 1A. A cone coefficient Conic is 0 in this embodiment, and K = 1.

**[Table 1B]**

| Surface number | A4 | A6 | A8 | A10 | A12 | A14 | A16 |
|---|---|---|---|---|---|---|---|
| 1S1 | 0.30 | -6.64 | 85.45 | -702.86 | 3896.93 | -15098.32 | 41829.45 |

(continued)

| Surface number | A4 | A6 | A8 | A10 | A12 | A14 | A16 |
|---|---|---|---|---|---|---|---|
| 1S2 | -0.20 | 4.46 | -55.72 | 438.58 | -2311.45 | 8493.32 | -22308.45 |
| 2S1 | 0.19 | -5.01 | 67.76 | -554.64 | 3001.47 | -11259.92 | 30107.89 |
| 2S2 | -0.09 | 2.00 | -25.67 | 213.46 | -1192.76 | 4646.93 | -12921.27 |
| 3S1 | -0.07 | -0.07 | 1.44 | -12.18 | 63.97 | -227.97 | 575.51 |
| 3S2 | -0.13 | 0.07 | 0.58 | -8.00 | 49.36 | -194.28 | 532.86 |
| 4S1 | 0.03 | -4.80 | 59.48 | -448.06 | 2258.36 | -7960.21 | 20118.40 |
| 4S2 | -0.64 | 5.46 | -74.43 | 673.61 | -4043.72 | 16741.98 | -49134.49 |
| 5S1 | -1.47 | 5.97 | -46.71 | 289.56 | -1486.24 | 6235.59 | -20264.86 |
| 5S2 | -1.52 | 8.70 | -63.85 | 279.52 | -796.22 | 1752.52 | -4118.26 |
| 6S1 | -0.71 | 36.58 | -299.65 | 1259.91 | -2844.22 | 803.71 | 16842.25 |
| 6S2 | 12.68 | 67.78 | -1266.03 | 8539.89 | -36538.66 | 110058.59 | -239130.65 |
| 7S1 | -3.31 | -61.75 | 1618.40 | -18037.16 | 114282.72 | -456146.27 | 1223830.44 |
| 7S2 | -38.16 | 278.51 | -1674.56 | 8821.28 | -43641.43 | 183938.17 | -589473.09 |

| Surface number | A18 | A20 | A22 | A24 | A26 | A28 | A30 |
|---|---|---|---|---|---|---|---|
| 1S1 | -83864.10 | 121850.63 | -126983.50 | 92463.85 | -44646.18 | 12838.80 | -1663.81 |
| 1S2 | 42422.17 | -58506.06 | 57925.08 | -40111.94 | 18439.72 | -5054.83 | 625.31 |
| 2S1 | -58195.68 | 81511.52 | -81919.73 | 57563.63 | -26843.73 | 7461.88 | -935.61 |
| 2S2 | 25955.71 | -37722.74 | 39262.09 | -28513.13 | 13714.35 | -3924.43 | 505.61 |
| 3S1 | -1050.71 | 1394.82 | -1334.46 | 896.27 | -400.65 | 106.92 | -12.87 |
| 3S2 | -1050.27 | 1498.23 | -1532.86 | 1095.56 | -518.85 | 146.16 | -18.53 |
| 4S1 | -36897.97 | 49142.00 | -46985.64 | 31374.64 | -13864.33 | 3635.11 | -427.09 |
| 4S2 | 103756.76 | -158187.15 | 172556.48 | -131313.34 | 66194.28 | -19857.92 | 2682.90 |
| 5S1 | 48899.26 | -85444.38 | 105892.49 | -90378.95 | 50396.92 | -16500.71 | 2402.69 |
| 5S2 | 10947.72 | -24311.86 | 37733.11 | -38619.01 | 24853.48 | -9122.93 | 1457.90 |
| 6S1 | -60729.21 | 116693.83 | -143482.06 | 116294.03 | -60395.95 | 18278.80 | -2457.69 |
| 6S2 | 374718.18 | -417905.41 | 321482.80 | -159270.48 | 42731.57 | -2493.88 | -1004.40 |
| 7S1 | -2293008.09 | 3053585.93 | -2889417.27 | 1904422.63 | -832993.60 | 217680.01 | -25752.14 |
| 7S2 | 1365929.23 | -2250413.77 | 2603313.70 | -2065069.12 | 1069623.11 | -325920.38 | 44322.07 |

Therefore, a basic parameter of the optical system of the camera lens according to the first embodiment of this application that is manufactured and designed by using the foregoing parameters is recorded in the following Table 1C. In Table 1C, "F#" is an F value (a quantity of apertures) of the optical system of the camera lens. "EFL" is an effective focal length when the optical system of the camera lens performs focusing in a case in which the focus distance is infinity. "EF1" is an effective focal length of the first group of lenses G1. "TTL" is a total track length of the optical system of the camera lens during focusing in a case in which the focus distance is infinity. "IMH" is a maximum radius (a maximum half image height) of an imaging circle on the image plane P. "△" is a focusing stroke of the first group of lenses G1. "D1" is a maximum value of maximum effective diameters of all lenses in the first group of lenses G1. "D2" is a minimum value of maximum effective diameters of all lenses in the second group of lenses G2.

**[Table 1C]**

| | |
|---|---|
| F# | 2.1 |
| EFL | 6.3 mm |
| IMH | 4.64 mm |
| TTL | 7 mm |
| △ | 0.24 mm |
| △/TTL | 0.034 |
| TTL/IMH | 1.51 |
| EFL/IMH | 1.36 |
| D2/D1 | 1.79 |
| EFL1/EFL | 0.9 |

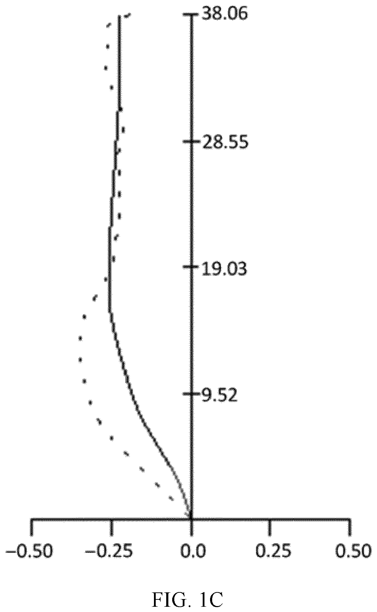

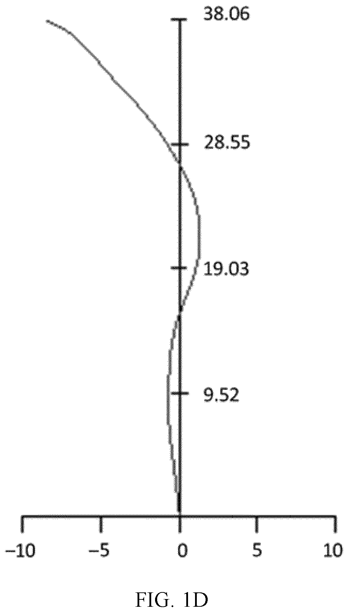

By using the foregoing solution, the optical system of the camera lens according to the first embodiment of this application can be obtained. In FIG. 1B to FIG. 1D, a spherical chromatic aberration diagram, an astigmatism diagram and a distortion diagram of the optical system are shown. As shown in FIG. 1B, curves in the spherical chromatic aberration diagram represent values of spherical aberrations of light with different wavelengths (center wavelengths are 650 nm, 610 nm, 555 nm, 510 nm, and 470 nm) passing through the vertical axis of the optical system, and represent deviations of focusing points after the light ray passes through the optical imaging system. In FIG. 1B, a horizontal coordinate is an offset (unit: mm), a vertical coordinate is a normalized value, and a plurality of curves basically overlap. As shown in FIG. 1C, a solid line in the astigmatism diagram indicates a bending degree of light with a center wavelength (555 nm) on a meridian image plane, and a dashed line indicates a bending degree of light with a center wavelength (555 nm) on an arc vector image plane. A horizontal coordinate is the bending degree (unit: mm), and a vertical coordinate is a field of view (unit: degree). As shown in FIG. 1D, a solid line in the distortion diagram indicates a distortion value of light with a center wavelength (555 nm) passing through the optical system, and indicates distortion magnitudes in different field of view cases. A horizontal coordinate is a distortion value, a value of the distortion value is a percentage, and a vertical coordinate is a field of view (unit: degree). An aberration of the optical system in this application can be described by using these accompanying drawings, and therefore it can be indicated that the camera lens in this application has better optical performance. The following embodiments all have similar accompanying drawings, and these accompanying drawings have similar functions. Therefore, details are not described again in the following embodiments.

The following describes a camera lens according to a second embodiment of this application.

(The camera lens according to the second embodiment of this application is used).

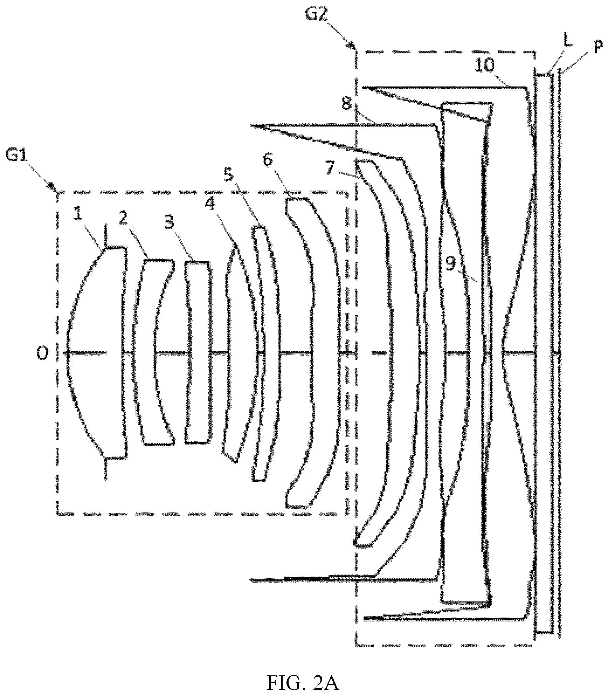

As shown in FIG. 2A, the camera lens according to the second embodiment of this application includes a total of 10 lenses, a light filter L, and an image plane P. All lenses may be made of optical plastic. These lenses are a first lens 1, a second lens 2, a third lens 3, a fourth lens 4, a fifth lens 5, a sixth lens 6, a seventh lens 7, an eighth lens 8, a ninth lens 9, and a tenth lens 10 that are sequentially arranged from an object side to an image side. The first lens 1, the second lens 2, the third lens 3, the fourth lens 4, the fifth lens 5, and the sixth lens 6 are grouped into a first group of lenses G1, and the seventh lens 7, the eighth lens 8, the ninth lens 9, and the tenth lens 10 are grouped into a second group of lenses G2. The first group of lenses G1 can move relative to the image plane P of the camera lens, and the second group of lenses G2 are fastened relative to the image plane P. In this way, when the camera lens switches from focusing in a case in which a focus distance is infinity to focusing in a case in which the focus distance is a minimum macro distance, the first group of lenses G1 move along an optical axis O relative to the image plane P (move towards an object side), and the second group of lenses G2 remain fastened relative to the image plane P.

In this embodiment, when the camera lens implements focusing in a case in which the focus distance is infinity, an effective focal length EFL of the camera lens (an optical system formed by lenses in the figure) is 5.78 mm, an F number F# of the camera lens is 2.6, and a total track length TTL of the camera lens is 7.31 mm. When the camera lens implements focusing in a case in which the focus distance is a minimum macro distance, the effective focal length of the camera lens EFL is 5.58 mm, the F number F# of the camera lens is 2.6, and the total track length TTL of the camera lens is 7.61 mm.

Further, in this embodiment, in a process in which the camera lens switches from focusing in a case in which the focus distance is infinity to focusing in a case in which the focus distance is the minimum macro distance, a distance △ (that is, a focusing stroke) that the first group of lenses G1 move upward relative to the image plane P is 0.30 mm, a ratio △/TTL of the focusing stroke to the total track length TTL of the camera lens when the camera lens implements focusing in a case in which the focus distance is infinity is 0.041.

Further, in this embodiment, a maximum half image height IMH of the camera lens is 4.13 mm. When the camera lens implements focusing in a case in which the focus distance is infinity, a ratio TTL/IMH of the total track length TTL of the camera lens to the maximum half image height IMH is 1.77. In addition, when the camera lens implements focusing in which the focus distance is infinity, a ratio EFL/IMH of the effective focal length of the camera lens to the maximum half image height IMH is 1.40.

Further, in this embodiment, a focal power of the first group of lenses G1 is positive, a focal power of the second group of lenses G2 is negative, an effective focal length EFL1 of the first group of lenses G1 is 5.69 mm, and an effective focal length EFL2 of the second group of lenses G2 is -8.45 mm. Therefore, a ratio EFL1/EFL of the effective focal length EFL1 of the first group of lenses G1 to the effective focal length EFL of the camera lens when focusing is implemented in a case in which the focus distance of the camera lens is infinity is 0.98. More specifically, a focal power of the first lens 1 is positive, a focal power of the second lens 2 is negative, a focal power of the third lens 3 is negative, a focal power of the fourth lens 4 is positive, a focal power of the fifth lens 5 is negative, a focal power of the sixth lens 6 is negative, a focal power of the seventh lens 7 is positive, a focal power of the eighth lens 8 is positive, a focal power of the ninth lens 9 is negative, and a focal power of the tenth lens 10 is negative. In addition, a part (a central part) that is of an object side surface of the second lens 2 and that is close to the optical axis O protrudes towards an object side. A part (a central part) that is of an image side surface of the second lens 2 and that is close to the optical axis O recesses towards the object side. Apart (a central part) that is close to the optical axis O and that is of an object side surface of a lens (that is, the sixth lens 6) most close to an image side in the first group of lenses G1 protrudes towards the object side.

Further, in this embodiment, a maximum value D1 of maximum effective diameters of all lenses in the first group of lenses G1 is 4.89 mm, a minimum value D2 of maximum effective diameters of all lenses in the second group of lenses G2 is 5.66 mm, and D2/D1=1.16.

The following describes surface types and related parameters of all lenses and the light filter L.

First, fundamental plane type parameters of the optical system of the camera lens according to the second embodiment of this application are recorded in the following Table 2A. In Table 2A, "surface number" is a surface corresponding to each optical component in the optical system. "Surface type" indicates a shape of a surface, where Sphere indicates a spherical surface, and Asphere indicates an aspheric surface. When "surface type" is Asphere, a shape parameter of the surface is calculated according to the following formula 1. "R" indicates a curvature radius of a surface. "Th" indicates an interplane axial thickness of an optical component (for example, a lens). "Nd" indicates a refractive index of a material. "Vd" indicates an Abbe figure of a material. "SA" indicates a radial radius. "Conic" indicates a cone coefficient. In addition, corresponding inf in each parameter indicates infinity.

**[Table 2A]**

| Surface number | Surface type | R (mm) | Th (mm) | Nd | Vd | SA (mm) | Conic |
|---|---|---|---|---|---|---|---|
| Object plane | Sphere | inf | inf | | | | |
| 1S1 | Asphere | 2.40 | 0.80 | 1.54 | 55.93 | 1.54 | |
| 1S2 | Asphere | 14.69 | 0.18 | | | 1.45 | |
| 2S1 | Asphere | 5.99 | 0.30 | 1.67 | 19.24 | 1.35 | |
| 2S2 | Asphere | 3.24 | 0.52 | | | 1.21 | |
| 3S1 | Asphere | 40.26 | 0.32 | 1.67 | 19.24 | 1.20 | |
| 3S2 | Asphere | 13.98 | 0.28 | | | 1.33 | |
| 4S1 | Asphere | 188.34 | 0.41 | 1.54 | 55.93 | 1.50 | |
| 4S2 | Asphere | -5.96 | 0.10 | | | 1.61 | |
| 5S1 | Asphere | -24.57 | 0.22 | 1.54 | 55.93 | 1.77 | |
| 5S2 | Asphere | 76.97 | 0.47 | | | 1.86 | |
| 6S1 | Asphere | 6.75 | 0.43 | 1.57 | 37.32 | 2.06 | |
| 6S2 | Asphere | 18.15 | 0.78 | | | 2.26 | |
| 7S1 | Asphere | -9.33 | 0.41 | 1.54 | 55.93 | 2.69 | |
| 7S2 | Asphere | -9.07 | 0.11 | | | 2.83 | |
| 8S1 | Asphere | -27.89 | 0.29 | 1.54 | 55.93 | 3.07 | |
| 8S2 | Asphere | -3.79 | 0.34 | | | 3.34 | -0.63 |

(continued)

| Surface number | Surface type | R (mm) | Th (mm) | Nd | Vd | SA (mm) | Conic |
|---|---|---|---|---|---|---|---|
| 9S1 | Asphere | -14.34 | 0.23 | 1.54 | 55.90 | 3.40 | 1.64 |
| 9S2 | Asphere | -29.28 | 0.10 | | | 3.66 | |
| 10S1 | Asphere | -369.48 | 0.19 | 1.54 | 55.90 | 3.60 | |
| 10S2 | Asphere | 2.21 | 0.46 | | | 3.90 | -1.05 |
| LS1 | Sphere | inf | 0.26 | 1.52 | 64.17 | 3.98 | |
| LS2 | Sphere | inf | 0.10 | | | 4.10 | |
| Image plane P | Sphere | inf | 0.00 | | | 4.17 | |

An aspheric coefficient of each lens is recorded in the following Table 2B, and data in Table 2B is a high-order term coefficient of an aspheric surface whose surface type is Asphere in Table 2A. A surface number of an aspheric surface in Table 2B corresponds to a surface number in Table 2A. This formula can be used to determine a surface type of an aspheric surface. Without the high-order term coefficient, the aspheric surface type cannot be determined. All aspheric surface types may be limited by using the following aspheric surface formula:

$$z = \frac{cr^2}{1+\sqrt{1-Kc^2r^2}} + A_4r^4 + A_6r^6 + A_8r^8 + ... + A_{30}r^{30} \quad \text{(Formula 1)}$$

z is a vector height of the aspheric surface, r is a radial coordinate of the aspheric surface, c is a spherical curvature of a vertex of the aspheric surface, K is a conic constant, and A4, A6, A8, ..., and A30 are aspheric coefficients. In the formula, an independent variable is the radial coordinate r of the aspheric surface, and 0<r<SA. For a specific value of SA, refer to Table 2A. The spherical curvature of the vertex c is 1/R. For a specific value of R, refer to Table 2A. K=1-Conic, where Conic is a cone coefficient.

[Table 2B]

| Surface number | A4 | A6 | A8 | A10 | A12 | A14 | A16 |
|---|---|---|---|---|---|---|---|
| 1S1 | -0.036 | 0.955 | -12.350 | 99.580 | -536.697 | 2020.391 | -5453.332 |
| 1S2 | -0.003 | 0.110 | -2.065 | 24.765 | -183.732 | 895.735 | -2992.270 |
| 2S1 | -0.052 | 1.030 | -13.817 | 114.878 | -618.270 | 2266.645 | -5839.282 |
| 2S2 | 0.071 | -1.986 | 29.524 | -258.598 | 1473.810 | -5751.631 | 15846.767 |
| 3S1 | -0.124 | 1.228 | -16.407 | 134.307 | -728.062 | 2744.189 | -7392.706 |
| 3S2 | -0.132 | 0.366 | -6.115 | 63.197 | -431.452 | 2058.536 | -7005.777 |
| 4S1 | -0.185 | 1.189 | -19.348 | 181.684 | -1091.614 | 4493.548 | -13165.653 |
| 4S2 | -0.195 | 0.970 | -19.200 | 182.755 | -1028.279 | 3796.698 | -9694.865 |
| 5S1 | -0.273 | 0.902 | -17.966 | 202.787 | -1324.846 | 5529.453 | -15503.915 |
| 5S2 | -0.417 | -1.513 | 20.718 | -123.142 | 422.820 | -745.710 | -141.042 |
| 6S1 | -0.927 | 1.432 | -22.415 | 215.386 | -1306.440 | 5434.729 | -16024.585 |
| 6S2 | -0.575 | -0.928 | 0.942 | 3.131 | 53.004 | -557.067 | 2472.770 |
| 7S1 | 1.221 | -3.178 | -25.164 | 633.990 | -5329.776 | 25330.004 | -78162.531 |
| 7S2 | 0.686 | -5.463 | 19.404 | 489.098 | -6144.161 | 34322.455 | -117553.603 |
| 8S1 | -1.756 | 72.461 | -731.022 | 4231.027 | -15932.508 | 38533.250 | -52826.361 |
| 8S2 | 5.358 | 62.406 | -979.707 | 7153.501 | -33044.012 | 103453.786 | -225218.850 |
| 9S1 | 7.225 | -224.851 | 2579.109 | -17231.007 | 77954.747 | -259446.877 | 658333.340 |
| 9S2 | 1.734 | -20.470 | 188.426 | -478.124 | -3135.137 | 28768.924 | -110782.678 |
| 10S1 | -6.195 | 84.987 | -567.323 | 24.494 | 23008.642 | -158919.539 | 578421.821 |
| 10S2 | -7.102 | -161.685 | 2532.057 | -19920.463 | 100809.332 | -352190.860 | 878385.377 |
|  |  |  |  |  |  |  |  |
| Surface number | A18 | A20 | A22 | A24 | A26 | A28 | A30 |
| 1S1 | 10693.616 | -15261.464 | 15688.460 | -11314.397 | 5431.364 | -1558.132 | 202.049 |
| 1S2 | 7015.781 | -11650.874 | 13632.165 | -10986.559 | 5802.863 | -1807.540 | 251.632 |
| 2S1 | 10744.750 | -14176.761 | 13293.034 | -8635.902 | 3690.068 | -931.282 | 104.979 |

(continued)

| Surface number | A18 | A20 | A22 | A24 | A26 | A28 | A30 |
|---|---|---|---|---|---|---|---|
| 2S2 | -31318.835 | 44562.040 | -45237.545 | 31944.997 | -14900.238 | 4124.411 | -512.751 |
| 3S1 | 14430.570 | -20453.891 | 20841.490 | -14874.767 | 7057.635 | -1999.435 | 255.912 |
| 3S2 | 17124.052 | -30011.268 | 37285.460 | -31995.044 | 18010.471 | -5978.963 | 886.583 |
| 4S1 | 27963.794 | -43208.078 | 48082.754 | -37530.598 | 19491.667 | -6046.572 | 847.305 |
| 4S2 | 17598.485 | -22952.475 | 21423.258 | -14014.597 | 6127.970 | -1615.540 | 194.914 |
| 5S1 | 29919.545 | -39912.790 | 36218.992 | -21379.829 | 7426.475 | -1166.048 | 7.419 |
| 5S2 | 4319.660 | -11724.484 | 17551.396 | -16443.066 | 9604.217 | -3208.820 | 469.150 |
| 6S1 | 33893.305 | -51401.086 | 55218.454 | -40873.574 | 19759.367 | -5595.475 | 701.154 |
| 6S2 | -6682.647 | 12122.358 | -15195.889 | 13059.272 | -7361.593 | 2451.859 | -365.254 |
| 7S1 | 166022.892 | -248806.886 | 263818.724 | -194331.077 | 94817.262 | -27595.415 | 3629.817 |
| 7S2 | 271794.786 | -439537.694 | 499842.510 | -392418.611 | 202653.851 | -61960.403 | 8496.881 |
| 8S1 | 12672.457 | 99742.840 | -211871.903 | 223385.346 | -137305.639 | 46985.514 | -6953.969 |
| 8S2 | 341630.485 | -352820.777 | 231821.611 | -78227.770 | -2447.336 | 11353.898 | -2741.163 |
| 9S1 | -1274480.640 | 1848751.051 | -1955922.701 | 1454509.293 | -717330.383 | 210145.597 | -27643.869 |
| 9S2 | 264912.589 | -431808.219 | 491480.737 | -386040.001 | 199795.082 | -61348.015 | 8465.495 |
| 10S1 | -1347267.357 | 2134552.687 | -2338944.488 | 1751328.474 | -857286.435 | 247587.810 | -32017.588 |
| 10S2 | -1587627.617 | 2081731.430 | -1956329.264 | 1280979.150 | -553624.418 | 141626.132 | -16205.066 |

Therefore, a basic parameter of the optical system of the camera lens according to the second embodiment of this application that is manufactured and designed by using the foregoing parameters is recorded in the following Table 2C. In Table 2C, "F#" is an F value (a quantity of apertures) of the optical system of the camera lens. "EFL" is an effective focal length when the optical system of the camera lens performs focusing in a case in which the focus distance is infinity. "EF1" is an effective focal length of the first group of lenses G1. "TTL" is a total track length of the optical system of the camera lens during focusing in a case in which the focus distance is infinity. "IMH" is a maximum radius (a maximum half image height) of an imaging circle on the image plane P. "△" is a focusing stroke of the first group of lenses G1. "D1" is a maximum value of maximum effective diameters of all lenses in the first group of lenses G1. "D2" is a minimum value of maximum effective diameters of all lenses in the second group of lenses G2.

**[Table 2C]**

| | |
|---|---|
| F# | 2.6 |
| EFL | 5.78 mm |
| IMH | 4.13 mm |
| TTL | 7.31 mm |
| △ | 0.30 mm |
| △/TTL | 0.041 |
| TTL/IMH | 1.77 |
| EFL/IMH | 1.40 |
| D2/D1 | 1.16 |
| EFL1/EFL | 0.98 |

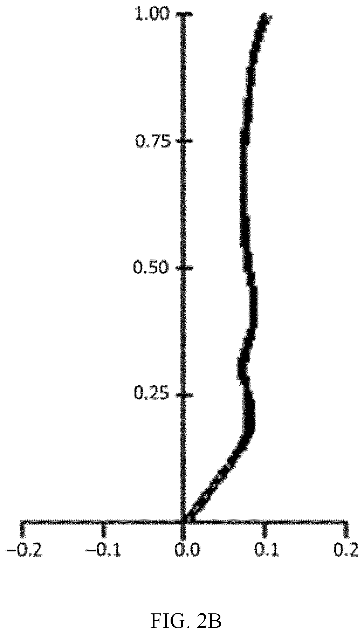

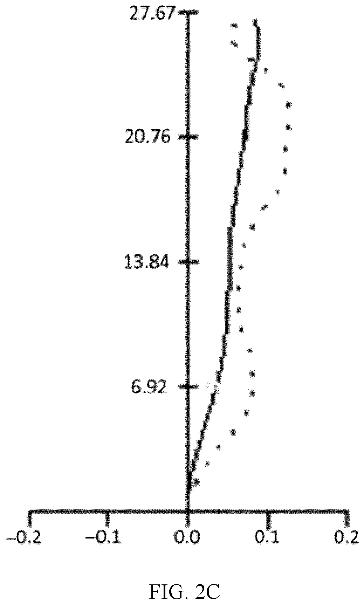

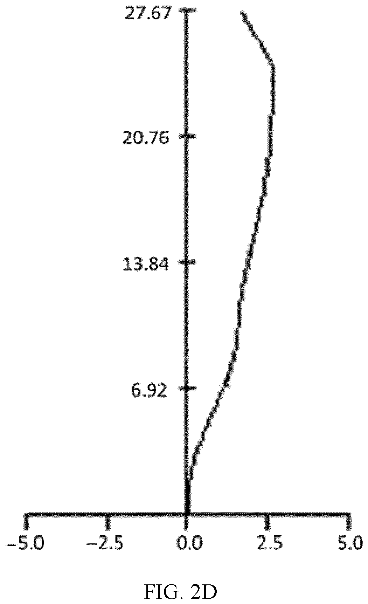

By using the foregoing solution, the optical system of the camera lens according to the second embodiment of this application can be obtained. In FIG. 2B to FIG. 2D, a spherical chromatic aberration diagram, an astigmatism diagram and a distortion diagram of the optical system are shown. As shown in FIG. 2B, curves in the spherical chromatic aberration diagram represent values of spherical aberrations of light with different wavelengths (center wavelengths are 650 nm, 610 nm, 555 nm, 510 nm, and 470 nm) passing through the vertical axis of the optical system, and represent deviations of focusing points after the light ray passes through the optical imaging system. In FIG. 2B, a horizontal coordinate is an offset (unit: mm), a vertical coordinate is a normalized value, and a plurality of curves basically overlap. As shown in FIG. 2C, a solid line in the astigmatism diagram indicates a bending degree of light with a center wavelength (555 nm) on a meridian image plane, and a dashed line indicates a bending degree of light with a center wavelength (555 nm) on an arc vector image plane. A horizontal coordinate is the bending degree (unit: mm), and a vertical coordinate is a field of view (unit: degree). As shown in FIG. 2D, a solid line in the distortion diagram indicates a distortion value of light with a center wavelength (555 nm) passing through the optical system. A value of the distortion value is a percentage, and indicates distortion magnitudes in different field of view cases. A horizontal coordinate is the distortion value, and a vertical coordinate is the field of view (unit: degree).

The following describes a camera lens according to a third embodiment of this application.

(The camera lens according to the third embodiment of this application is used).

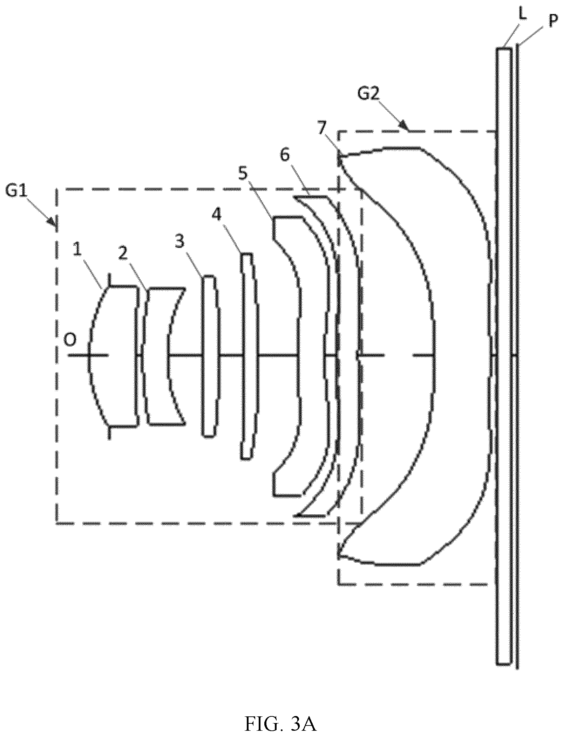

As shown in FIG. 3A, the camera lens according to the third embodiment of this application includes a total of seven lenses, a light filter L, and an image plane P. All lenses may be made of optical plastic. These lenses are a first lens 1, a second lens 2, a third lens 3, a fourth lens 4, a fifth lens 5, a sixth lens 6, and a seventh lens 7 that are sequentially arranged from an object side to an image side. The first lens 1, the second lens 2, the third lens 3, the fourth lens 4, the fifth lens 5, and the sixth lens 6 are grouped into a first group of lenses G1, and the seventh lens 7 is grouped into a second group of lenses G2. The first group of lenses G1 can move relative to the image plane P of the camera lens, and the second group of lenses G2 are fastened relative to the image plane P. In this way, when the camera lens switches from focusing in a case in which a focus distance is infinity to focusing in a case in which the focus distance is a minimum macro distance, the first group of lenses G1 move along an optical axis O relative to the image plane P (move towards an object side), and the second group of lenses G2 remain fastened relative to the image plane P.

In this embodiment, when the camera lens implements focusing in a case in which the focus distance is infinity, an effective focal length EFL of the camera lens (an optical system formed by lenses in the figure) is 5.91 mm, an F number F# of the camera lens is 3, and a total track length TTL of the camera lens is 6.64 mm. When the camera lens implements focusing in a case in which the focus distance is a minimum macro distance, the effective focal length of the camera lens EFL is 6.08 mm, the F number F# of the camera lens is 3, and the total track length TTL of the camera lens is 6.93 mm.

Further, in this embodiment, in a process in which the camera lens switches from focusing in a case in which the focus distance is infinity to focusing in a case in which the focus distance is the minimum macro distance, a distance △ (that is, a focusing stroke) that the first group of lenses G1 move upward relative to the image plane P is 0.29 mm, a ratio △/TTL of the focusing stroke to the total track length TTL of the camera lens when the camera lens implements focusing in a case in which the focus distance is infinity is 0.044.

Further, in this embodiment, a maximum half image height IMH of the camera lens is 3.85 mm. When the camera lens implements focusing in a case in which the focus distance is infinity, a ratio TTL/IMH of the total track length TTL of the camera lens to the maximum half image height IMH is 1.73. In addition, when the camera lens implements focusing in which the focus distance is infinity, a ratio EFL/IMH of the effective focal length of the camera lens to the maximum half image height IMH is 1.54.

Further, in this embodiment, a focal power of the first group of lenses G1 is positive, a focal power of the second group of lenses G2 is positive, an effective focal length EFL1 of the first group of lenses G1 is 5.77 mm, and an effective focal length EFL2 of the second group of lenses G2 is 10.87 mm. Therefore, a ratio EFL 1/EFL of the effective focal length EFL1 of the first group of lenses G1 to the effective focal length EFL of the camera lens when focusing is implemented in a case in which the focus distance of the camera lens is infinity is 0.98. More specifically, a focal power of the first lens 1 is positive, a focal power of the second lens 2 is negative, a focal power of the third lens 3 is positive, a focal power of the fourth lens 4 is positive, a focal power of the fifth lens 5 is negative, a focal power of the sixth lens 6 is positive, and a focal power of the seventh lens 7 is positive. In addition, a part (a central part) that is of an object side surface of the second lens 2 and that is close to the optical axis O protrudes towards an object side. Apart (a central part) that is of an image side surface of the second lens 2 and that is close to the optical axis O recesses towards the object side. Apart (a central part) that is close to the optical axis O and that is of an object side surface of a lens (that is, the sixth lens 6) most close to an image side in the first group of lenses G1 protrudes towards the object side.

Further, in this embodiment, a maximum value D1 of maximum effective diameters of all lenses in the first group of lenses G1 is 2.42 mm, a minimum value D2 of maximum effective diameters of all lenses in the second group of lenses G2 is 3.47 mm, and D2/D1=1.43.

The following describes surface types and related parameters of all lenses and the light filter L.

First, fundamental plane type parameters of the optical system of the camera lens according to the third embodiment of this application are recorded in the following Table 3A. In Table 3A, "surface number" is a surface corresponding to each optical component in the optical system. "Surface type" indicates a shape of a surface, where Sphere indicates a spherical surface, and Asphere indicates an aspheric surface. When "surface type" is Asphere, a shape parameter of the surface is calculated according to the following formula 1. "R" indicates a curvature radius of a surface. "Th" indicates an interplane axial thickness of an optical component (for example, a lens). "Nd" indicates a refractive index of a material. "Vd" indicates an Abbe figure of a material. "SA" indicates a radial radius. "Conic" indicates a cone coefficient. In addition, corresponding inf in each parameter indicates infinity.

**[Table 3A]**

| Surface number | Surface type | R (mm) | Th (mm) | Nd | Vd | SA (mm) | Conic |
|---|---|---|---|---|---|---|---|
| Object plane | Sphere | 0.00 | inf | inf | | | |
| 1S1 | Sphere | 0.00 | inf | -0.30 | | | |
| 1S2 | Asphere | 0.49 | 2.05 | 0.73 | 1.54 | 55.93 | |
| 2S1 | Asphere | 0.03 | 38.60 | 0.10 | | | |
| 2S2 | Asphere | 0.20 | 5.07 | 0.39 | 1.67 | 19.24 | |
| 3S1 | Asphere | 0.46 | 2.17 | 0.55 | | | |
| 3S2 | Asphere | 0.08 | 11.94 | 0.24 | 1.67 | 19.24 | |
| 4S1 | Asphere | 0.03 | 35.34 | 0.40 | | | |
| 4S2 | Asphere | 0.04 | 27.76 | 0.21 | 1.54 | 55.93 | |
| 5S1 | Asphere | 0.01 | 106.25 | 0.62 | | | |
| 5S2 | Asphere | 0.21 | 4.72 | 0.42 | 1.57 | 37.32 | |
| 6S1 | Asphere | 0.24 | 4.21 | 0.18 | | | |
| 6S2 | Asphere | 0.15 | 6.55 | 0.34 | 1.57 | 37.32 | |

(continued)

| Surface number | Surface type | R (mm) | Th (mm) | Nd | Vd | SA (mm) | Conic |
|---|---|---|---|---|---|---|---|
| 7S1 | Asphere | 0.13 | 7.48 | 1.19 | | | |
| 7S2 | Asphere | -0.18 | -5.67 | 0.87 | 1.54 | 55.93 | |
| LS1 | Asphere | -0.33 | -3.06 | 0.10 | | | -0.35 |
| LS2 | Sphere | 0.00 | inf | 0.21 | 1.52 | 64.17 | |
| Image plane P | Sphere | 0.00 | inf | 0.10 | | | |

An aspheric coefficient of each lens is recorded in the following Table 3B, and data in Table 3B is a high-order term coefficient of an aspheric surface whose surface type is Asphere in Table 3A. A surface number of an aspheric surface in Table 3B corresponds to a surface number in Table 3A. This formula can be used to determine a surface type of an aspheric surface. Without the high-order term coefficient, the aspheric surface type cannot be determined. All aspheric surface types may be limited by using the following aspheric surface formula:

$$z = \frac{cr^2}{1+\sqrt{1-Kc^2r^2}} + A_4r^4 + A_6r^6 + A_8r^8 + ... + A_{30}r^{30} \quad \text{(Formula 1)}$$

z is a vector height of the aspheric surface, r is a radial coordinate of the aspheric surface, c is a spherical curvature of a vertex of the aspheric surface, K is a conic constant, and A4, A6, A8, ..., and A30 are aspheric coefficients. In the formula, an independent variable is the radial coordinate r of the aspheric surface, and 0<r<SA. For a specific value of SA, refer to Table 3A. The spherical curvature of the vertex c is 1/R. For a specific value of R, refer to Table 3A. K=1-Conic, where Conic is a cone coefficient.

[Table 3B]

| Surface number | A4 | A6 | A8 | A10 | A12 | A14 | A16 |
|---|---|---|---|---|---|---|---|
| 1S1 | -0.09 | 2.21 | -38.21 | 388.15 | -2622.73 | 12335.86 | -41647.06 |
| 1S2 | 0.05 | -1.34 | 23.92 | -264.08 | 1929.74 | -9746.85 | 34889.86 |
| 2S1 | -0.06 | 0.54 | -8.55 | 93.53 | -677.15 | 3374.06 | -11876.77 |
| 2S2 | -0.01 | -0.16 | 1.93 | -5.95 | -36.15 | 460.92 | -2331.24 |
| 3S1 | -0.01 | -0.83 | 4.08 | 5.12 | -219.69 | 1604.09 | -6681.48 |
| 3S2 | -0.04 | -0.47 | -3.37 | 73.76 | -596.52 | 2926.48 | -9653.95 |
| 4S1 | 0.05 | -3.20 | 22.71 | -106.12 | 335.96 | -670.16 | 587.32 |
| 4S2 | -0.27 | -6.47 | 72.30 | -453.20 | 1830.47 | -4668.39 | 6245.72 |
| 5S1 | -1.32 | -1.17 | -5.43 | 49.66 | 445.88 | -6210.86 | 32199.26 |
| 5S2 | 0.17 | -40.29 | 644.58 | -6692.50 | 45883.89 | -212536.72 | 682242.05 |
| 6S1 | 1.82 | -108.98 | 1834.08 | -18847.18 | 127200.06 | -584792.32 | 1878141.33 |
| 6S2 | 0.70 | -95.28 | 1537.09 | -14879.72 | 95898.38 | -427747.07 | 1348520.95 |
| 7S1 | 2.57 | 12.85 | -932.66 | 10804.18 | -67243.28 | 268411.06 | -735963.59 |
| 7S2 | 47.84 | -497.92 | 3598.96 | -23511.78 | 136035.64 | -611232.21 | 1993689.36 |

| Surface number | A18 | A20 | A22 | A24 | A26 | A28 | A30 |
|---|---|---|---|---|---|---|---|
| 1S1 | 102382.53 | -182836.73 | 233340.00 | -206272.89 | 119505.84 | -40704.43 | 6167.53 |
| 1S2 | -89537.54 | 164786.87 | -215024.89 | 193647.19 | -114193.65 | 39607.80 | -6117.06 |
| 2S1 | 29957.09 | -54289.08 | 69994.82 | -62547.41 | 36755.89 | -12753.65 | 1976.74 |
| 2S2 | 7178.00 | -14723.31 | 20581.50 | -19398.45 | 11796.88 | -4178.36 | 654.45 |
| 3S1 | 18326.50 | -34596.54 | 45346.11 | -40610.32 | 23724.62 | -8151.08 | 1249.36 |
| 3S2 | 22272.29 | -36436.71 | 42114.74 | -33636.38 | 17662.22 | -5485.49 | 763.36 |
| 4S1 | 858.13 | -3802.10 | 6400.31 | -6350.50 | 3857.33 | -1328.79 | 198.94 |
| 4S2 | 1516.13 | -23813.63 | 48435.08 | -52982.63 | 34237.90 | -12328.87 | 1915.67 |
| 5S1 | -97674.22 | 192863.34 | -255764.10 | 226433.81 | -128430.17 | 42200.12 | -6106.07 |

(continued)

| Surface number | A18 | A20 | A22 | A24 | A26 | A28 | A30 |
|---|---|---|---|---|---|---|---|
| 5S2 | -1545203.74 | 2486761.04 | -2826880.30 | 2218592.31 | -1143657.95 | 348423.37 | -47536.98 |
| 6S1 | -4279127.36 | 6950444.82 | -7989632.48 | 6347667.20 | -3314522.05 | 1023229.46 | -141489.38 |
| 6S2 | -3038012.21 | 4898990.38 | -5601901.02 | 4430481.79 | -2302936.78 | 707406.20 | -97264.53 |
| 7S1 | 1430759.55 | -1994873.78 | 1985577.02 | -1379090.16 | 635625.92 | -174811.71 | 21721.39 |
| 7S2 | -4646779.10 | 7715103.87 | -9047546.75 | 7321979.31 | -3890971.81 | 1221960.03 | -171873.97 |

Therefore, a basic parameter of the optical system of the camera lens according to the third embodiment of this application that is manufactured and designed by using the foregoing parameters is recorded in the following Table 3C. In Table 3C, "F#" is an F value (a quantity of apertures) of the optical system of the camera lens. "EFL" is an effective focal length when the optical system of the camera lens performs focusing in a case in which the focus distance is infinity. "EF1" is an effective focal length of the first group of lenses G1. "TTL" is a total track length of the optical system of the camera lens during focusing in a case in which the focus distance is infinity. "IMH" is a maximum radius (a maximum half image height) of an imaging circle on the image plane P. "△" is a focusing stroke of the first group of lenses G1. "D1" is a maximum value of maximum effective diameters of all lenses in the first group of lenses G1. "D2" is a minimum value of maximum effective diameters of all lenses in the second group of lenses G2.

[Table 3C]

| F# | 3 |
| --- | --- |
| EFL | 5.91 mm |
| IMH | 3.85 mm |
| TTL | 6.64 mm |
| △ | 0.29 mm |
| △/TTL | 0.044 |
| TTL/IMH | 1.73 |
| EFL/IMH | 1.54 |
| D2/D1 | 1.43 |
| EFL1/EFL | 0.98 |

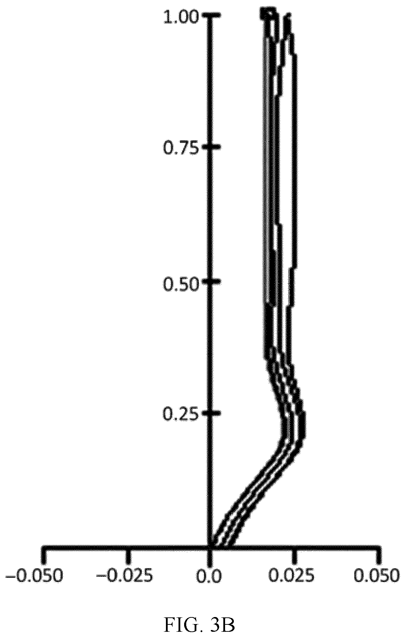

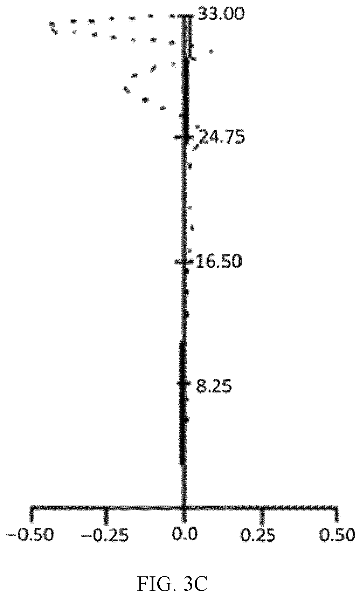

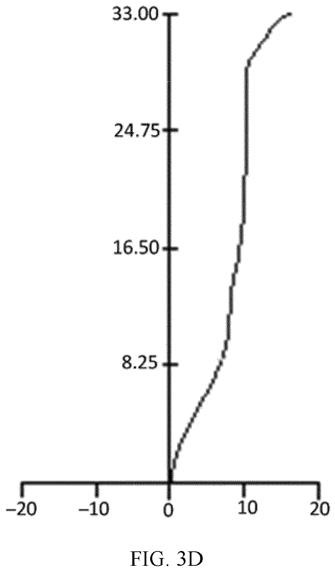

By using the foregoing solution, the optical system of the camera lens according to the third embodiment of this application can be obtained. In FIG. 3B to FIG. 3D, a spherical chromatic aberration diagram, an astigmatism diagram and a distortion diagram of the optical system are shown. As shown in FIG. 3B, curves in the spherical chromatic aberration diagram represent values of spherical aberrations of light with different wavelengths (center wavelengths are 650 nm, 610 nm, 555 nm, 510 nm, and 470 nm) passing through the vertical axis of the optical system, and represent deviations of focusing points after the light passes through the optical imaging system. In FIG. 3B, a horizontal coordinate is an offset (unit: mm), and a vertical coordinate is a normalized value. As shown in FIG. 3C, a solid line in the astigmatism diagram indicates a bending degree of light with a center wavelength (555 nm) on a meridian image plane, and a dashed line indicates a bending degree of light with a center wavelength (555 nm) on an arc vector image plane. A horizontal coordinate is the bending degree (unit: mm), and a vertical coordinate is a field of view (unit: degree). As shown in FIG. 3D, a solid line in the distortion diagram indicates a distortion value of light with a center wavelength (555 nm) passing through the optical system. A value of the distortion value is a percentage, and indicates distortion magnitudes in different field of view cases. A horizontal coordinate is the distortion value, and a vertical coordinate is the field of view (unit: degree).

The following describes a camera lens according to a fourth embodiment of this application.

(The camera lens according to the fourth embodiment of this application is used).

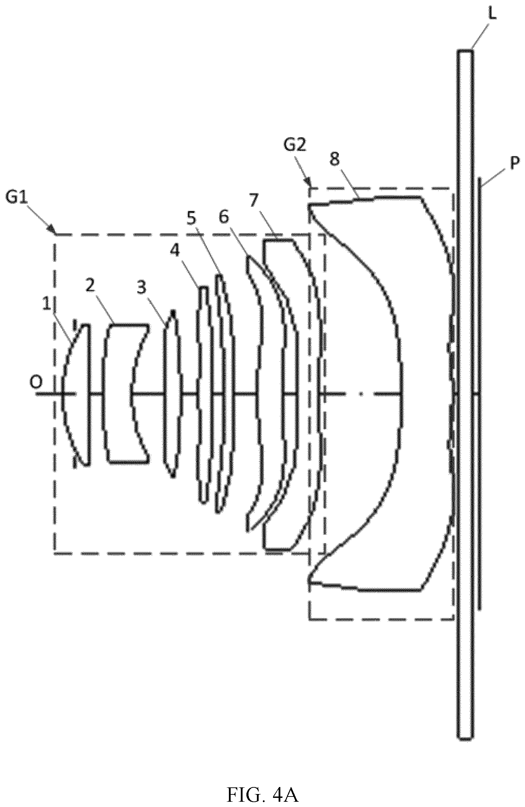

As shown in FIG. 4A, the camera lens according to the fourth embodiment of this application includes a total of eight lenses, a light filter L, and an image plane P. All lenses may be made of optical plastic. These lenses are a first lens 1, a second lens 2, a third lens 3, a fourth lens 4, a fifth lens 5, a sixth lens 6, a seventh lens 7, and an eighth lens 8 that are sequentially arranged from an object side to an image side. The first lens 1, the second lens 2, the third lens 3, the fourth lens 4, the fifth lens 5, the sixth lens 6, and the seventh lens 7 are grouped into a first group of lenses G1, and the eighth lens 8 is grouped into a second group of lenses G2. The first group of lenses G1 can move relative to the image plane P of the camera lens, and the second group of lenses G2 are fastened relative to the image plane P. In this way, when the camera lens switches from focusing in a case in which a focus distance is infinity to focusing in a case in which the focus distance is a minimum macro distance, the first group of lenses G1 move along an optical axis O relative to the image plane P (move towards an object side), and the second group of lenses G2 remain fastened relative to the image plane P.

In this embodiment, when the camera lens implements focusing in a case in which the focus distance is infinity, an effective focal length EFL of the camera lens (an optical system formed by lenses in the figure) is 5.08 mm, an F number F# of the camera lens is 2.8, and a total track length TTL of the camera lens is 6.39 mm. When the camera lens implements focusing in a case in which the focus distance is a minimum macro distance, the effective focal length of the camera lens EFL is 5.20 mm, the F number F# of the camera lens is 2.8, and the total track length TTL of the camera lens is 6.65 mm.

Further, in this embodiment, in a process in which the camera lens switches from focusing in a case in which the focus distance is infinity to focusing in a case in which the focus distance is the minimum macro distance, a distance △ (that is, a focusing stroke) that the first group of lenses G1 move upward relative to the image plane P is 0.26 mm, a ratio △/TTL of the focusing stroke to the total track length TTL of the camera lens when the camera lens implements focusing in a case in which the focus distance is infinity is 0.04.

Further, in this embodiment, a maximum half image height IMH of the camera lens is 3.61 mm. When the camera lens implements focusing in a case in which the focus distance is infinity, a ratio TTL/IMH of the total track length TTL of the camera lens to the maximum half image height IMH is 1.77. In addition, when the camera lens implements focusing in which the focus distance is infinity, a ratio EFL/IMH of the effective focal length of the camera lens to the maximum half image height IMH is 1.41.

Further, in this embodiment, a focal power of the first group of lenses G1 is positive, a focal power of the second group of lenses G2 is positive, an effective focal length EFL1 of the first group of lenses G1 is 4.70 mm, and an effective focal length EFL2 of the second group of lenses G2 is 11.91 mm. Therefore, a ratio EFL 1/EFL of the effective focal length EFL 1 of the first group of lenses G1 to the effective focal length EFL of the camera lens when focusing is implemented in a case in which the focus distance of the camera lens is infinity is 0.93. More specifically, a focal power of the first lens 1 is positive, a focal power of the second lens 2 is negative, a focal power of the third lens 3 is positive, a focal power of the fourth lens 4 is positive, a focal power of the fifth lens 5 is negative, a focal power of the sixth lens 6 is positive, a focal power of the seventh lens 7 is negative, and a focal power of the eighth lens 8 is positive. In addition, a part (a central part) that is of an object side surface of the second lens 2 and that is close to the optical axis O protrudes towards an object side. Apart (a central part) that is of an image side surface of the second lens 2 and that is close to the optical axis O recesses towards the object side. Apart (a central part) that is close to the optical axis O and that is of an object side surface of a lens (that is, the seventh lens 7) most close to an image side in the first group of lenses G1 protrudes towards the object side.

Further, in this embodiment, a maximum value D1 of maximum effective diameters of all lenses in the first group of lenses G1 is 4.5 mm, a minimum value D2 of maximum effective diameters of all lenses in the second group of lenses G2 is 7.12 mm, and D2/D 1 = 1.58.

The following describes surface types and related parameters of all lenses and the light filter L.

First, fundamental plane type parameters of the optical system of the camera lens according to the fourth embodiment of this application are recorded in the following Table 4A. In Table 4A, "surface number" is a surface corresponding to each optical component in the optical system. "Surface type" indicates a shape of a surface, where Sphere indicates a spherical surface, and Asphere indicates an aspheric surface. When "surface type" is Asphere, a shape parameter of the surface is calculated according to the following formula 1. "R" indicates a curvature radius of a surface. "Th" indicates an interplane axial thickness of an optical component (for example, a lens). "Nd" indicates a refractive index of a material. "Vd" indicates an Abbe figure of a material. "SA" indicates a radial radius. "Conic" indicates a cone coefficient. In addition, corresponding inf in each parameter indicates infinity.

**[Table 4A]**

| Surface number | Surface type | R (mm) | Th (mm) | Nd | Vd | SA (mm) | Conic |
|---|---|---|---|---|---|---|---|
| Object plane | Sphere | inf | inf | | | | |
| 1S1 | Asphere | 1.90 | 0.39 | 1.54 | 55.93 | 0.97 | |
| 1S2 | Asphere | 34.29 | 0.22 | | | 0.96 | |
| 2S1 | Asphere | 4.96 | 0.46 | 1.67 | 19.24 | 0.96 | |
| 2S2 | Asphere | 2.08 | 0.49 | | | 0.90 | |
| 3S1 | Asphere | 14.90 | 0.24 | 1.67 | 19.24 | 1.11 | |
| 3S2 | Asphere | -349.38 | 0.29 | | | 1.19 | |
| 4S1 | Asphere | 21.24 | 0.21 | 1.54 | 55.93 | 1.43 | |
| 4S2 | Asphere | -2.89E+6 | 0.16 | | | 1.50 | |
| 5S1 | Asphere | -398.93 | 0.16 | 1.54 | 55.93 | 1.60 | |
| 5S2 | Asphere | -551.72 | 0.36 | | | 1.64 | |
| 6S1 | Asphere | 3.72 | 0.39 | 1.57 | 37.32 | 1.83 | |

(continued)

| Surface number | Surface type | R (mm) | Th (mm) | Nd | Vd | SA (mm) | Conic |
|---|---|---|---|---|---|---|---|
| 6S2 | Asphere | 6.96 | 0.24 | | | 1.94 | |
| 7S1 | Asphere | 29.89 | 0.32 | 1.57 | 37.32 | 1.97 | |
| 7S2 | Asphere | 7.16 | 1.28 | | | 2.25 | |
| 8S1 | Asphere | -5.62 | 0.78 | 1.54 | 55.93 | 2.61 | |
| 8S2 | Asphere | -3.16 | 0.10 | | | 3.56 | -0.41 |
| LS1 | Sphere | inf | 0.21 | 1.52 | 64.17 | 4.64 | |
| LS2 | Sphere | inf | 0.10 | | | 4.77 | |
| Image plane P | Sphere | inf | 0.00 | | | 4.92 | |

An aspheric coefficient of each lens is recorded in the following Table 4B, and data in Table 4B is a high-order term coefficient of an aspheric surface whose surface type is Asphere in Table 4A. A surface number of an aspheric surface in Table 4B corresponds to a surface number in Table 4A. This formula can be used to determine a surface type of an aspheric surface. Without the high-order term coefficient, the aspheric surface type cannot be determined. All aspheric surface types may be limited by using the following aspheric surface formula:

$$z = \frac{cr^2}{1+\sqrt{1-Kc^2r^2}} + A_4 r^4 + A_6 r^6 + A_8 r^8 + ... + A_{30} r^{30} \quad \text{(Formula 1)}$$

z is a vector height of the aspheric surface, r is a radial coordinate of the aspheric surface, c is a spherical curvature of a vertex of the aspheric surface, K is a conic constant, and A4, A6, A8, ..., and A30 are aspheric coefficients. In the formula, an independent variable is the radial coordinate r of the aspheric surface, and 0<r<SA. For a specific value of SA, refer to Table 4A. The spherical curvature of the vertex c is 1/R. For a specific value of R, refer to Table 4A. K=1-Conic, where Conic is a cone coefficient.

**[Table 4B]**

| Surface number | A4 | A6 | A8 | A10 | A12 | A14 | A16 |
|---|---|---|---|---|---|---|---|
| 1S1 | -9.46E-0 1 | 2.64E+01 | -4.19E+02 | 4.16E+03 | -2.76E+04 | 1.28E+05 | -4.20E+05 |
| 1S2 | 9.90E-01 | -2.49E+01 | 3.50E+02 | -3.12E+03 | 1.88E+04 | -7.97E+04 | 2.43E+05 |
| 2S1 | -3.16E-01 | 7.78E+00 | -1.20E+02 | 1.15E+03 | -7.32E+03 | 3.26E+04 | -1.03E+05 |
| 2S2 | 8.27E-02 | -2.91E+00 | 4.57E+01 | -4.50E+02 | 2.99E+03 | -1.39E+04 | 4.63E+04 |
| 3S1 | -1.12E-01 | 4.04E+00 | -7.38E+01 | 7.04E+02 | -4.30E+03 | 1.82E+04 | -5.53E+04 |
| 3S2 | -1.53E-01 | 5.25E+00 | -9.50E+01 | 8.60E+02 | -4.89E+03 | 1.90E+04 | -5.27E+04 |
| 4S1 | -7.45E-01 | 3.63E+01 | -7.28E+02 | 7.58E+03 | -4.87E+04 | 2.10E+05 | -6.37E+05 |
| 4S2 | -1.49E+00 | 5.60E+01 | -9.57E+02 | 8.94E+03 | -5.22E+04 | 2.05E+05 | -5.64E+05 |
| 5S1 | -7.19E-01 | 2.08E+01 | -3.37E+02 | 3.06E+03 | -1.74E+04 | 6.64E+04 | -1.76E+05 |
| 5S2 | 8.91E-01 | -5.52E+01 | 8.80E+02 | -7.81E+03 | 4.35E+04 | -1.61E+05 | 4.10E+05 |
| 6S1 | -5.73E-02 | -3.57E+01 | 2.73E+02 | 5.05E+02 | -2.16E+04 | 1.65E+05 | -6.93E+05 |
| 6S2 | -8.44E-0 1 | 2.66E+01 | -4.73E+02 | 4.05E+03 | -2.08E+04 | 7.04E+04 | -1.64E+05 |
| 7S1 | -2.24E+00 | 4.73E+01 | -5.42E+02 | 3.12E+03 | -1.00E+04 | 1.73E+04 | -7.76E+03 |
| 7S2 | -3.51E+00 | 8.09E+01 | -1.40E+03 | 1.28E+04 | -7.09E+04 | 2.62E+05 | -6.74E+05 |
| 8S1 | 1.31E+00 | 2.29E+01 | -5.64E+02 | 4.51E+03 | -2.04E+04 | 5.69E+04 | -9.36E+04 |
| 8S2 | 1.52E+01 | 4.43E+02 | -9.39E+03 | 8.79E+04 | -5.07E+05 | 1.98E+06 | -5.47E+06 |

(continued)

| Surface number | A4 | A6 | A8 | A10 | A12 | A14 | A16 |
|---|---|---|---|---|---|---|---|
| | | | | | | | |

| Surface number | A18 | A20 | A22 | A24 | A26 | A28 | A30 |
|---|---|---|---|---|---|---|---|
| 1S1 | 9.93E+05 | -1.68E+06 | 2.03E+06 | -1.70E+06 | 9.30E+05 | -3.01E+05 | 4.36E+04 |
| 1S2 | -5.37E+05 | 8.63E+05 | -9.95E+05 | 8.03E+05 | -4.30E+05 | 1.37E+05 | -1.97E+04 |
| 2S1 | 2.38E+05 | -3.95E+05 | 4.69E+05 | -3.89E+05 | 2.13E+05 | -6.93E+04 | 1.01E+04 |
| 2S2 | -1.11E+05 | 1.92E+05 | -2.37E+05 | 2.03E+05 | -1.15E+05 | 3.83E+04 | -5.73E+03 |
| 3S1 | 1.22E+05 | -1.97E+05 | 2.28E+05 | -1.84E+05 | 9.87E+04 | -3.15E+04 | 4.51E+03 |
| 3S2 | 1.05E+05 | -1.53E+05 | 1.58E+05 | -1.14E+05 | 5.42E+04 | -1.52E+04 | 1.91E+03 |
| 4S1 | 1.38E+06 | -2.16E+06 | 2.41E+06 | -1.88E+06 | 9.69E+05 | -2.97E+05 | 4.09E+04 |
| 4S2 | 1.11E+06 | -1.56E+06 | 1.57E+06 | -1.10E+06 | 5.09E+05 | -1.40E+05 | 1.73E+04 |
| 5S1 | 3.32E+05 | -4.50E+05 | 4.35E+05 | -2.93E+05 | 1.31E+05 | -3.48E+04 | 4.20E+03 |
| 5S2 | -7.28E+05 | 9.03E+05 | -7.71E+05 | 4.35E+05 | -1.50E+05 | 2.61E+04 | -1.26E+03 |
| 6S1 | 1.87E+06 | -3.41E+06 | 4.27E+06 | -3.62E+06 | 1.98E+06 | -6.37E+05 | 9.11E+04 |
| 6S2 | 2.69E+05 | -3.16E+05 | 2.63E+05 | -1.51E+05 | 5.74E+04 | -1.29E+04 | 1.30E+03 |
| 7S1 | -3.24E+04 | 8.29E+04 | -1.00E+05 | 7.32E+04 | -3.27E+04 | 8.27E+03 | -9.12E+02 |
| 7S2 | 1.25E+06 | -1.70E+06 | 1.68E+06 | -1.19E+06 | 5.78E+05 | -1.71E+05 | 2.32E+04 |
| 8S1 | 5.73E+04 | 1.07E+05 | -3.12E+05 | 3.73E+05 | -2.50E+05 | 9.19E+04 | -1.44E+04 |
| 8S2 | 1.09E+07 | -1.55E+07 | 1.59E+07 | -1.14E+07 | 5.37E+06 | -1.51E+06 | 1.90E+05 |

Therefore, a basic parameter of the optical system of the camera lens according to the fourth embodiment of this application that is manufactured and designed by using the foregoing parameters is recorded in the following Table 3C. In Table 4C, "F#" is an F value (a quantity of apertures) of the optical system of the camera lens. "EFL" is an effective focal length when the optical system of the camera lens performs focusing in a case in which the focus distance is infinity. "EF1" is an effective focal length of the first group of lenses G1. "TTL" is a total track length of the optical system of the camera lens during focusing in a case in which the focus distance is infinity. "IMH" is a maximum radius (a maximum half image height) of an imaging circle on the image plane P. "△" is a focusing stroke of the first group of lenses G1. "D1" is a maximum value of maximum effective diameters of all lenses in the first group of lenses G1. "D2" is a minimum value of maximum effective diameters of all lenses in the second group of lenses G2.

**[Table 4C]**

| F# | 2.8 |
|---|---|
| EFL | 5.08 mm |
| IMH | 3.61 mm |
| TTL | 6.39 mm |
| △ | 0.26 mm |
| △/TTL | 0.04 |
| TTL/IMH | 1.77 |
| EFL/IMH | 1.41 |
| D2/D1 | 1.58 |
| EFL1/EFL | 0.93 |

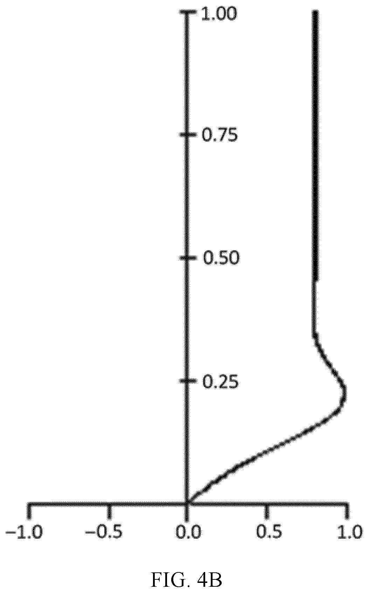

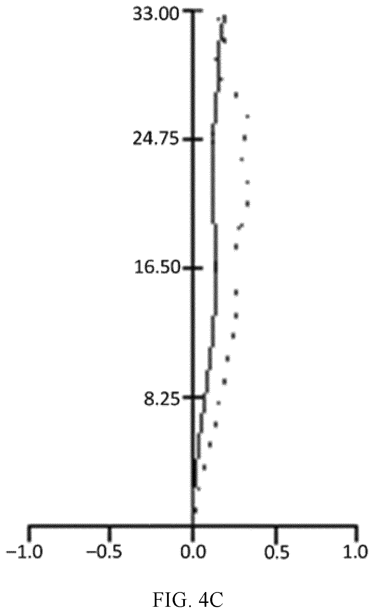

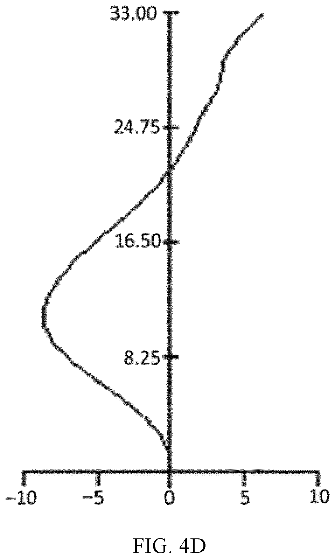

By using the foregoing solution, the optical system of the camera lens according to the fourth embodiment of this application can be obtained. In FIG. 4B to FIG. 4D, a spherical chromatic aberration diagram, an astigmatism diagram and a distortion diagram of the optical system are shown. As shown in FIG. 4B, curves in the spherical chromatic aberration diagram represent values of spherical aberrations of light with different wavelengths (center wavelengths are 650 nm, 610 nm, 555 nm, 510 nm, and 470 nm) passing through the vertical axis of the optical system, and represent deviations of focusing points after the light ray passes through the optical imaging system. In FIG. 4B, a horizontal coordinate is an offset (unit: mm), a vertical coordinate is a normalized value, and a plurality of curves basically overlap. As shown in FIG. 4C, a solid line in the astigmatism diagram indicates a bending degree of light with a center wavelength (555 nm) on a meridian image plane, and a dashed line indicates a bending degree of light with a center wavelength (555 nm) on an arc vector image plane. A horizontal coordinate is the bending degree (unit: mm), and a vertical coordinate is a field of view (unit: degree). As shown in FIG. 4D, a solid line in the distortion diagram indicates a distortion value of light with a center wavelength (555 nm) passing through the optical system, and indicates distortion magnitudes in different field of view cases. A horizontal coordinate is a distortion value, a value of the distortion value is a percentage, and a vertical coordinate is a field of view (unit: degree).

The following describes a camera lens according to a fifth embodiment of this application.

(The camera lens according to the fifth embodiment of this application is used).

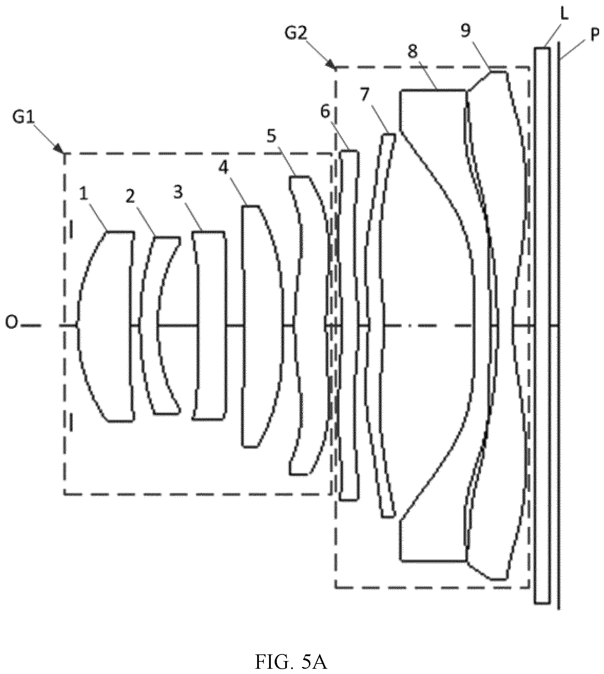

As shown in FIG. 5A, the camera lens according to the fifth embodiment of this application includes a total of nine lenses, a light filter L, and an image plane P. All lenses may be made of optical plastic. These lenses are a first lens 1, a second lens 2, a third lens 3, a fourth lens 4, a fifth lens 5, a sixth lens 6, a seventh lens 7, an eighth lens 8, and a ninth lens 9 that are sequentially arranged from an object side to an image side. The first lens 1, the second lens 2, the third lens 3, the fourth lens 4, and the fifth lens 5 are grouped into a first group of lenses G1, and the sixth lens 6, the seventh lens 7, the eighth lens 8, and the ninth lens 9 are grouped into a second group of lenses G2. The first group of lenses G1 can move relative to the image plane P of the camera lens, and the second group of lenses G2 are fastened relative to the image plane P. In this way, when the camera lens switches from focusing in a case in which a focus distance is infinity to focusing in a case in which the focus distance is a minimum macro distance, the first group of lenses G1 move along an optical axis O relative to the image plane P (move towards an object side), and the second group of lenses G2 remain fastened relative to the image plane P.

In this embodiment, when the camera lens implements focusing in a case in which the focus distance is infinity, an effective focal length EFL of the camera lens (an optical system formed by lenses in the figure) is 5.30 mm, an F number F# of the camera lens is 2.2, and a total track length TTL of the camera lens is 6.87 mm. When the camera lens implements focusing in a case in which the focus distance is a minimum macro distance, the effective focal length of the camera lens EFL is 5.30 mm, the F number F# of the camera lens is 2.2, and the total track length TTL of the camera lens is 7.11 mm.

Further, in this embodiment, in a process in which the camera lens switches from focusing in a case in which the focus distance is infinity to focusing in a case in which the focus distance is the minimum macro distance, a distance △ (that is, a focusing stroke) that the first group of lenses G1 move upward relative to the image plane P is 0.24 mm, a ratio △/TTL of the focusing stroke to the total track length TTL of the camera lens when the camera lens implements focusing in a case in which the focus distance is infinity is 0.035.

Further, in this embodiment, a maximum half image height IMH of the camera lens is 3.99 mm. When the camera lens implements focusing in a case in which the focus distance is infinity, a ratio TTL/IMH of the total track length TTL of the camera lens to the maximum half image height IMH is 1.72. In addition, when the camera lens implements focusing in which the focus distance is infinity, a ratio EFL/IMH of the effective focal length of the camera lens to the maximum half image height IMH is 1.33.

Further, in this embodiment, a focal power of the first group of lenses G1 is positive, a focal power of the second group of lenses G2 is negative, an effective focal length EFL1 of the first group of lenses G1 is 5.17 mm, and an effective focal length EFL2 of the second group of lenses G2 is -6.04 mm. Therefore, a ratio EFL1/EFL of the effective focal length EFL1 of the first group of lenses G1 to the effective focal length EFL of the camera lens when focusing is implemented in a case in which the focus distance of the camera lens is infinity is 0.98. More specifically, a focal power of the first lens 1 is positive, a focal power of the second lens 2 is negative, a focal power of the third lens 3 is negative, a focal power of the fourth lens 4 is positive, a focal power of the fifth lens 5 is positive, a focal power of the sixth lens 6 is positive, a focal power of the seventh lens 7 is negative, a focal power of the eighth lens 8 is negative, and a focal power of the ninth lens 9 is negative. In addition, a part (a central part) that is of an object side surface of the second lens 2 and that is close to the optical axis O protrudes towards an object side. A part (a central part) that is of an image side surface of the second lens 2 and that is close to the optical axis O recesses towards the object side. A part (a central part) that is close to the optical axis O and that is of an object side surface of a lens (that is, the fifth lens 5) most close to an image side in the first group of lenses G1 protrudes towards the object side.

Further, in this embodiment, a maximum value D1 of maximum effective diameters of all lenses in the first group of lenses G1 is 4.22 mm, a minimum value D2 of maximum effective diameters of all lenses in the second group of lenses G2 is 4.94 mm, and D2/D1=1.17.

The following describes surface types and related parameters of all lenses and the light filter L.

First, fundamental plane type parameters of the optical system of the camera lens according to the fifth embodiment of this application are recorded in the following Table 5A. In Table 5A, "surface number" is a surface corresponding to each optical component in the optical system. "Surface type" indicates a shape of a surface, where Sphere indicates a spherical surface, and Asphere indicates an aspheric surface. When "surface type" is Asphere, a shape parameter of the surface is calculated according to the following formula 1. "R" indicates a curvature radius of a surface. "Th" indicates an interplane axial thickness of an optical component (for example, a lens). "Nd" indicates a refractive index of a material. "Vd" indicates an Abbe figure of a material. "SA" indicates a radial radius. "Conic" indicates a cone coefficient. In addition, corresponding inf in each parameter indicates infinity.

**[Table 5A]**

| Surface number | Surface type | R (mm) | Th (mm) | Nd | Vd | SA (mm) | Conic |
|---|---|---|---|---|---|---|---|
| Object plane | Sphere | inf | inf | | | | |
| 1S1 | Sphere | 2.39 | 0.74 | 1.53 | 64.44 | 1.34 | |
| 1S2 | Sphere | 14.49 | 0.15 | | | 1.29 | |
| 2S1 | Asphere | 4.03 | 0.26 | 1.67 | 19.24 | 1.25 | |
| 2S2 | Asphere | 2.58 | 0.58 | | | 1.17 | |
| 3S1 | Asphere | 173.02 | 0.38 | 1.67 | 19.24 | 1.20 | |
| 3S2 | Asphere | 12.22 | 0.25 | | | 1.33 | |
| 4S1 | Asphere | 30.40 | 0.57 | 1.54 | 55.93 | 1.57 | |
| 4S2 | Asphere | -9.37 | 0.16 | | | 1.71 | |
| 5S1 | Asphere | 3.75 | 0.45 | 1.57 | 37.32 | 1.96 | |
| 5S2 | Asphere | 8.00 | 0.22 | | | 2.11 | |
| 6S1 | Asphere | -9.28 | 0.24 | 1.54 | 55.93 | 2.39 | |
| 6S2 | Asphere | -5.16 | 0.15 | | | 2.47 | -0.63 |
| 7S1 | Asphere | -4.50 | 0.22 | 1.54 | 55.90 | 2.66 | -0.63 |
| 7S2 | Asphere | -4.64 | 1.30 | | | 2.71 | |
| 8S1 | Asphere | -11.28 | 0.22 | 1.54 | 55.93 | 2.75 | 6.40 |
| 8S2 | Asphere | -12.25 | 0.10 | | | 3.33 | 0.88 |
| 9S1 | Asphere | -12.54 | 0.22 | 1.54 | 55.90 | 3.35 | 0.88 |
| 9S2 | Asphere | 3.06 | 0.32 | | | 3.59 | -0.98 |
| LS1 | Sphere | inf | 0.21 | 1.52 | 64.17 | 3.86 | |
| LS2 | Sphere | inf | 0.13 | | | 3.94 | |
| Image plane P | Sphere | inf | 0.00 | | | 4.03 | |

An aspheric coefficient of each lens is recorded in the following Table 5B, and data in Table 5B is a high-order term coefficient of an aspheric surface whose surface type is Asphere in Table 5A. A surface number of an aspheric surface in Table 5B corresponds to a surface number in Table 5A. This formula can be used to determine a surface type of an aspheric surface. Without the high-order term coefficient, the aspheric surface type cannot be determined. All aspheric surface types may be limited by using the following aspheric surface formula:

$$z = \frac{cr^2}{1+\sqrt{1-Kc^2r^2}} + A_4r^4 + A_6r^6 + A_8r^8 + ... + A_{30}r^{30} \quad \text{(Formula 1)}$$

z is a vector height of the aspheric surface, r is a radial coordinate of the aspheric surface, c is a spherical curvature of a vertex of the aspheric surface, K is a conic constant, and A4, A6, A8, ..., and A30 are aspheric coefficients.

In the formula, an independent variable is the radial coordinate r of the aspheric surface, and 0<r<SA. For a specific value of SA, refer to Table 5A. The spherical curvature of the vertex c is 1/R. For a specific value of R, refer to Table 5A. K=1-Conic, where Conic is a cone coefficient.

[Table 5B]

| Surface number | A4 | A6 | A8 | A10 | A12 | A14 | A16 |
|---|---|---|---|---|---|---|---|
| 2S1 | 0.00 | 0.09 | -1.46 | 15.06 | -97.21 | 418.46 | -1248.11 |
| 2S2 | 0.01 | 0.03 | -0.21 | 2.42 | -17.27 | 82.23 | -273.88 |
| 3S1 | -0.08 | 0.04 | -0.31 | 2.15 | -9.90 | 30.17 | -56.91 |
| 3S2 | -0.12 | -0.10 | 1.51 | -12.46 | 68.65 | -260.51 | 701.08 |
| 4S1 | -0.12 | 0.06 | -1.21 | 9.37 | -46.84 | 172.13 | -474.68 |
| 4S2 | -0.39 | 0.50 | -3.35 | 30.93 | -208.36 | 984.80 | -3284.74 |
| 5S1 | -0.68 | -0.45 | 3.50 | -20.92 | 74.83 | -145.16 | 111.74 |
| 5S2 | -0.17 | -2.70 | 17.18 | -99.00 | 408.30 | -1186.82 | 2522.04 |
| 6S1 | 0.50 | -1.66 | 18.28 | -68.74 | 40.11 | 659.15 | -3158.60 |
| 6S2 | 1.33 | 6.36 | -57.20 | 223.69 | -512.53 | 645.38 | -107.68 |
| 7S1 | 4.32 | 1.34 | -67.06 | 308.11 | -847.33 | 1551.06 | -1810.12 |
| 7S2 | 3.63 | -12.76 | 88.75 | -438.24 | 1258.82 | -2092.15 | 1541.18 |
| 8S1 | 0.86 | -24.13 | 141.25 | -600.42 | 2152.15 | -6896.30 | 19315.21 |
| 8S2 | 4.87 | -29.16 | 83.45 | -559.43 | 4778.82 | -24947.63 | 83304.63 |
| 9S1 | -5.33 | 46.93 | -288.68 | 1232.99 | -4048.26 | 11017.80 | -25116.80 |
| 9S2 | -9.33 | 13.73 | -57.48 | 1833.32 | -17902.89 | 94123.84 | -318036.77 |

| Surface number | A18 | A20 | A22 | A24 | A26 | A28 | A30 |
|---|---|---|---|---|---|---|---|
| 2S1 | 2633.87 | -3960.72 | 4217.08 | -3106.05 | 1505.32 | -431.91 | 55.60 |
| 2S2 | 652.71 | -1120.11 | 1372.44 | -1170.17 | 658.80 | -219.89 | 32.92 |
| 3S1 | 50.13 | 35.83 | -165.54 | 222.97 | -160.52 | 62.07 | -10.17 |
| 3S2 | -1358.68 | 1901.58 | -1902.81 | 1325.84 | -610.26 | 166.58 | -20.40 |
| 4S1 | 983.13 | -1513.26 | 1698.99 | -1349.15 | 717.35 | -228.99 | 33.15 |
| 4S2 | 7799.67 | -13220.59 | 15870.14 | -13173.97 | 7190.61 | -2321.06 | 335.61 |
| 5S1 | 128.11 | -428.37 | 498.38 | -305.07 | 91.59 | -6.04 | -2.08 |
| 5S2 | -4037.42 | 4931.91 | -4556.77 | 3079.96 | -1428.67 | 403.75 | -52.11 |
| 6S1 | 7848.03 | -12554.53 | 13596.12 | -9957.78 | 4739.51 | -1325.60 | 165.50 |
| 6S2 | -1255.54 | 2717.52 | -3183.98 | 2386.02 | -1143.40 | 320.85 | -40.22 |
| 7S1 | 1029.66 | 447.76 | -1467.66 | 1395.24 | -726.40 | 207.70 | -25.61 |
| 7S2 | 1360.24 | -5242.65 | 7132.71 | -5758.48 | 2889.94 | -837.54 | 107.58 |
| 8S1 | -43731.75 | 74778.28 | -92335.52 | 79139.92 | -44501.46 | 14738.33 | -2177.08 |
| 8S2 | -189728.06 | 303527.86 | -342259.31 | 266731.00 | -136757.19 | 41491.52 | -5641.25 |
| 9S1 | 46940.21 | -69392.85 | 77558.79 | -62138.57 | 33286.10 | -10607.55 | 1515.26 |
| 9S2 | 739093.44 | -1211479.24 | 1401641.49 | -1121149.69 | 590088.34 | -183840.32 | 25679.37 |

Therefore, a basic parameter of the optical system of the camera lens according to the fifth embodiment of this application that is manufactured and designed by using the foregoing parameters is recorded in the following Table 5C. In Table 5C, "F#" is an F value (a quantity of apertures) of the optical system of the camera lens. "EFL" is an effective focal length when the optical system of the camera lens performs focusing in a case in which the focus distance is infinity. "EF1" is an effective focal length of the first group of lenses G1. "TTL" is a total track length of the optical system of the camera lens during focusing in a case in which the focus distance is infinity. "IMH" is a maximum radius (a maximum half image height) of an imaging circle on the image plane P. "△" is a focusing stroke of the first group of lenses G1. "D1" is a maximum value of maximum effective diameters of all lenses in the first group of lenses G1. "D2" is a minimum value of maximum effective diameters of all lenses in the second group of lenses G2.

**[Table 5C]**

| F# | 2.2 |
|---|---|
| EFL | 5.30 mm |
| IMH | 3.99 mm |
| TTL | 6.87 mm |
| △ | 0.24 mm |
| △/TTL | 0.035 |
| TTL/IMH | 1.72 |
| EFL/IMH | 1.33 |
| D2/D1 | 1.17 |
| EFL1/EFL | 0.98 |

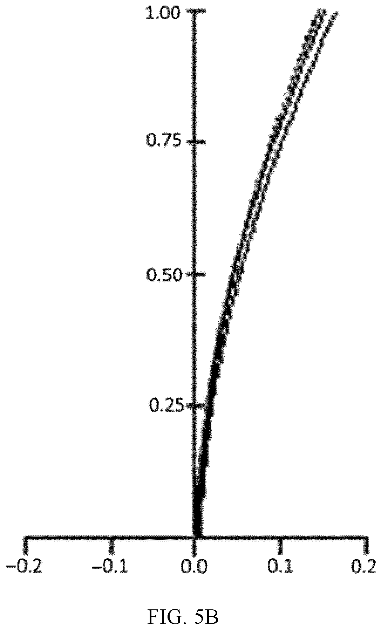

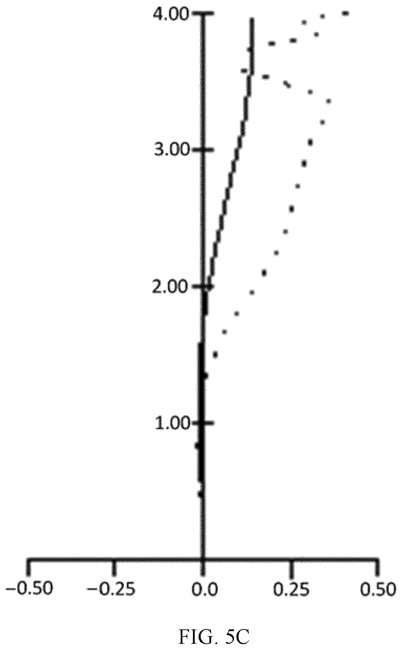

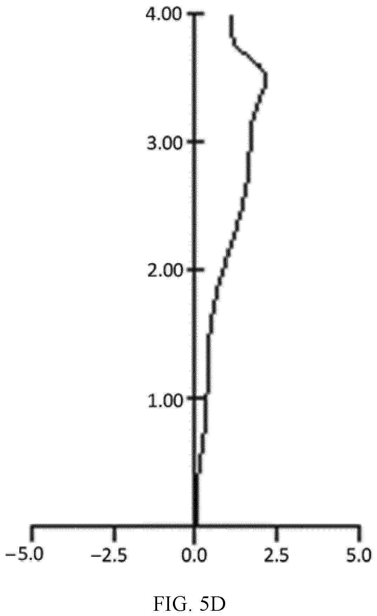

By using the foregoing solution, the optical system of the camera lens according to the fifth embodiment of this application can be obtained. In FIG. 5B to FIG. 5D, a spherical chromatic aberration diagram, an astigmatism diagram and a distortion diagram of the optical system are shown. As shown in FIG. 5B, curves in the spherical chromatic aberration diagram represent values of spherical aberrations of light with different wavelengths (center wavelengths are 650 nm, 610 nm, 555 nm, 510 nm, and 470 nm) passing through the vertical axis of the optical system, and represent deviations of focusing points after the light ray passes through the optical imaging system. In FIG. 5B, a horizontal coordinate is an offset (unit: mm), and a vertical coordinate is a normalized value. As shown in FIG. 5C, a solid line in the astigmatism diagram indicates a bending degree of light with a center wavelength (555 nm) on a meridian image plane, and a dashed line indicates a bending degree of light with a center wavelength (555 nm) on an arc vector image plane. A horizontal coordinate is the bending degree (unit: mm), and a vertical coordinate is a field of view (unit: degree). As shown in FIG. 5D, a solid line in the distortion diagram indicates a distortion value of light with a center wavelength (555 nm) passing through the optical system, and indicates distortion magnitudes in different field of view cases. A horizontal coordinate is a distortion value, a value of the distortion value is a percentage, and a vertical coordinate is a field of view (unit: degree).

The following describes a camera lens according to a sixth embodiment of this application.

(The camera lens according to the sixth embodiment of this application is used).

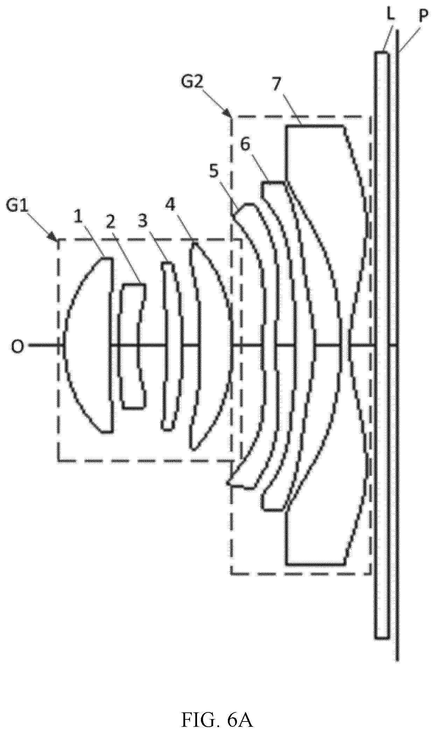

As shown in FIG. 6A, the camera lens according to the sixth embodiment of this application includes a total of seven lenses, a light filter L, and an image plane P. All lenses may be made of optical plastic. These lenses are a first lens 1, a second lens 2, a third lens 3, a fourth lens 4, a fifth lens 5, a sixth lens 6, and a seventh lens 7 that are sequentially arranged from an object side to an image side. The first lens 1, the second lens 2, the third lens 3, and the fourth lens 4 are grouped into a first group of lenses G1, and the fifth lens 5, the sixth lens 6, and the seventh lens 7 are grouped into a second group of lenses G2. The first group of lenses G1 can move relative to the image plane P of the camera lens, and the second group of lenses G2 are fastened relative to the image plane P. In this way, when the camera lens switches from focusing in a case in which a focus distance is infinity to focusing in a case in which the focus distance is a minimum macro distance, the first group of lenses G1 move along an optical axis O relative to the image plane P (move towards an object side), and the second group of lenses G2 remain fastened relative to the image plane P.

In this embodiment, when the camera lens implements focusing in a case in which the focus distance is infinity, an effective focal length EFL of the camera lens (an optical system formed by lenses in the figure) is 4.56 mm, an F number F# of the camera lens is 2.3, and a total track length TTL of the camera lens is 5.55 mm. When the camera lens implements focusing in a case in which the focus distance is a minimum macro distance, the effective focal length of the camera lens EFL is 4.44 mm, the F number F# of the camera lens is 2.3, and the total track length TTL of the camera lens is 5.70 mm.

Further, in this embodiment, in a process in which the camera lens switches from focusing in a case in which the focus distance is infinity to focusing in a case in which the focus distance is the minimum macro distance, a distance △ (that is, a focusing stroke) that the first group of lenses G1 move upward relative to the image plane P is 0.15 mm, a ratio △/TTL of the focusing stroke to the total track length TTL of the camera lens when the camera lens implements focusing in a case in which the focus distance is infinity is 0.027.

Further, in this embodiment, a maximum half image height IMH of the camera lens is 3.90 mm. When the camera lens implements focusing in a case in which the focus distance is infinity, a ratio TTL/IMH of the total track length TTL of the camera lens to the maximum half image height IMH is 1.42. In addition, when the camera lens implements focusing in which the focus distance is infinity, a ratio EFL/IMH of the effective focal length of the camera lens to the maximum half image height IMH is 1.17.

Further, in this embodiment, a focal power of the first group of lenses G1 is positive, a focal power of the second group of lenses G2 is negative, an effective focal length EFL1 of the first group of lenses G1 is 4.23 mm, and an effective focal length EFL2 of the second group of lenses G2 is -5.75 mm. Therefore, a ratio EFL1/EFL of the effective focal length EFL1 of the first group of lenses G1 to the effective focal length EFL of the camera lens when focusing is implemented in a case in which the focus distance of the camera lens is infinity is 0.93. More specifically, a focal power of the first lens 1 is positive, a focal power of the second lens 2 is negative, a focal power of the third lens 3 is positive, a focal power of the fourth lens 4 is positive, a focal power of the fifth lens 5 is negative, a focal power of the sixth lens 6 is positive, and a focal power of the seventh lens 7 is negative. In addition, a part (a central part) that is of an object side surface of the second lens 2 and that is close to the optical axis O protrudes towards an object side. Apart (a central part) that is of an image side surface of the second lens 2 and that is close to the optical axis O recesses towards the object side. A part (a central part) that is of an object side surface of a penultimate lens (that is, the third lens 3) that is of the first group of lenses G1 and that is close to the image side and that is close to the optical axis O protrudes towards the object side.

Further, in this embodiment, a maximum value D1 of maximum effective diameters of all lenses in the first group of lenses G1 is 3.42 mm, a minimum value D2 of maximum effective diameters of all lenses in the second group of lenses G2 is 4.72 mm, and D2/D1=1.38.

The following describes surface types and related parameters of all lenses and the light filter L.

First, fundamental plane type parameters of the optical system of the camera lens according to the sixth embodiment of this application are recorded in the following Table 6A. In Table 6A, "surface number" is a surface corresponding to each optical component in the optical system. "Surface type" indicates a shape of a surface, where Sphere indicates a spherical surface, and Asphere indicates an aspheric surface. When "surface type" is Asphere, a shape parameter of the surface is calculated according to the following formula 1. "R" indicates a curvature radius of a surface. "Th" indicates an interplane axial thickness of an optical component (for example, a lens). "Nd" indicates a refractive index of a material. "Vd" indicates an Abbe figure of a material. "SA" indicates a radial radius. "Conic" indicates a cone coefficient. In addition, corresponding inf in each parameter indicates infinity.

**[Table 6A]**

| Surface number | Surface type | R (mm) | Th (mm) | Nd | Vd | SA (mm) | Conic |
|---|---|---|---|---|---|---|---|
| Object plane | Sphere | inf | inf | | | | |
| 1S1 | Asphere | 2.00 | 0.75 | 1.54 | 55.93 | 1.46 | |
| 1S2 | Asphere | 16.24 | 0.15 | | | 1.30 | |
| 2S1 | Asphere | 7.51 | 0.32 | 1.67 | 19.24 | 1.04 | |
| 2S2 | Asphere | 2.83 | 0.46 | | | 0.80 | |
| 3S1 | Asphere | 30.70 | 0.27 | 1.67 | 19.24 | 1.35 | |
| 3S2 | Asphere | -21.66 | 0.31 | | | 1.39 | |
| 4S1 | Asphere | -10.98 | 0.54 | 1.54 | 55.93 | 1.62 | |
| 4S2 | Asphere | -3.31 | 0.51 | | | 1.71 | |
| 5S1 | Asphere | 9.14 | 0.22 | 1.57 | 37.32 | 2.13 | |
| 5S2 | Asphere | 8.49 | 0.34 | | | 2.36 | |
| 6S1 | Asphere | -6.80 | 0.30 | 1.54 | 55.93 | 2.47 | |
| 6S2 | Asphere | -2.71 | 0.44 | | | 2.73 | -0.63 |

(continued)

| Surface number | Surface type | R (mm) | Th (mm) | Nd | Vd | SA (mm) | Conic |
|---|---|---|---|---|---|---|---|
| 7S1 | Asphere | -5.91 | 0.15 | 1.54 | 55.90 | 2.77 | 1.64 |
| 7S2 | Asphere | 2.48 | 0.43 | | | 3.64 | -1.05 |
| LS1 | Sphere | inf | 0.21 | 1.52 | 64.17 | 4.72 | |
| LS2 | Sphere | inf | 0.15 | | | 4.88 | |
| Image plane P | Sphere | inf | 0.00 | | | 5.25 | |

An aspheric coefficient of each lens is recorded in the following Table 6B, and data in Table 6B is a high-order term coefficient of an aspheric surface whose surface type is Asphere in Table 6A. A surface number of an aspheric surface in Table 6B corresponds to a surface number in Table 6A. This formula can be used to determine a surface type of an aspheric surface. Without the high-order term coefficient, the aspheric surface type cannot be determined. All aspheric surface types may be limited by using the following aspheric surface formula:

$$z = \frac{cr^2}{1+\sqrt{1-Kc^2r^2}} + A_4 r^4 + A_6 r^6 + A_8 r^8 + ... + A_{30} r^{30} \quad \text{(Formula 1)}$$

z is a vector height of the aspheric surface, r is a radial coordinate of the aspheric surface, c is a spherical curvature of a vertex of the aspheric surface, K is a conic constant, and A4, A6, A8, ..., and A30 are aspheric coefficients. In the formula, an independent variable is the radial coordinate r of the aspheric surface, and 0<r<SA. For a specific value of SA, refer to Table 6A. The spherical curvature of the vertex c is 1/R. For a specific value of R, refer to Table 6A. K=1-Conic, where Conic is a cone coefficient.

**[Table 6B]**

| Surface number | A4 | A6 | A8 | A10 | A12 | A14 | A16 |
|---|---|---|---|---|---|---|---|
| 1S1 | 0.02 | -0.46 | 4.74 | -29.24 | 119.02 | -338.16 | 692.32 |
| 1S2 | -0.03 | 0.01 | -0.38 | 9.50 | -73.55 | 319.07 | -888.72 |
| 2S1 | -0.03 | 0.01 | 0.19 | -1.02 | 5.35 | -24.25 | 75.27 |
| 2S2 | 0.00 | 0.05 | -0.34 | 1.73 | -5.57 | 11.91 | -17.55 |
| 3S1 | -0.02 | -1.94 | 22.17 | -164.92 | 825.23 | -2823.24 | 6660.94 |
| 3S2 | -0.12 | -0.15 | -5.82 | 87.47 | -658.92 | 3192.95 | -10647.42 |
| 4S1 | -0.43 | 8.43 | -118.04 | 986.62 | -5505.65 | 21552.07 | -60668.62 |
| 4S2 | -0.18 | 0.83 | -3.91 | -21.41 | 311.99 | -1648.61 | 5234.75 |
| 5S1 | -1.22 | 2.96 | -23.91 | 175.66 | -981.16 | 4030.06 | -12112.71 |
| 5S2 | -1.21 | 3.75 | -28.38 | 176.11 | -871.16 | 3351.45 | -9757.14 |
| 6S1 | 0.08 | 6.29 | -39.87 | 147.18 | -424.27 | 966.72 | -1665.46 |
| 6S2 | 3.19 | 1.05 | -14.81 | -22.42 | 249.27 | -709.27 | 1161.58 |
| 7S1 | -0.59 | -2.78 | 34.28 | -158.11 | 402.70 | -637.21 | 671.97 |
| 7S2 | -12.01 | 35.46 | -16.62 | -447.92 | 2293.36 | -6139.74 | 10643.07 |
| | | | | | | | |
| Surface number | A18 | A20 | A22 | A24 | A26 | A28 | A30 |
| 1S1 | -1036.61 | 1136.23 | -899.91 | 499.81 | -184.03 | 40.22 | -3.94 |
| 1S2 | 1675.78 | -2184.22 | 1969.29 | -1205.10 | 477.50 | -110.47 | 11.33 |
| 2S1 | -154.19 | 210.65 | -193.03 | 117.21 | -45.25 | 10.06 | -0.98 |

(continued)

| Surface number | A18 | A20 | A22 | A24 | A26 | A28 | A30 |
|---|---|---|---|---|---|---|---|
| 2S2 | 18.16 | -13.26 | 6.78 | -2.36 | 0.53 | -0.07 | 0.00 |
| 3S1 | -10747.46 | 11405.78 | -7057.10 | 1305.91 | 1366.65 | -1006.57 | 214.51 |
| 3S2 | 25115.61 | -42264.75 | 50406.13 | -41593.82 | 22565.46 | -7234.04 | 1037.30 |
| 4S1 | 124260.41 | -185355.60 | 199202.89 | -150195.69 | 75369.40 | -22597.71 | 3061.83 |
| 4S2 | -11118.11 | 16365.03 | -16780.88 | 11774.06 | -5389.92 | 1449.99 | -173.77 |
| 5S1 | 26595.46 | -42413.69 | 48436.01 | -38502.51 | 20191.71 | -6268.55 | 871.15 |
| 5S2 | 21081.76 | -33280.21 | 37661.83 | -29634.25 | 15352.12 | -4697.22 | 641.86 |
| 6S1 | 2098.75 | -1898.86 | 1213.07 | -532.72 | 152.82 | -25.76 | 1.93 |
| 6S2 | -1256.65 | 938.77 | -488.55 | 174.32 | -40.73 | 5.62 | -0.35 |
| 7S1 | -491.81 | 254.59 | -93.26 | 23.72 | -3.99 | 0.40 | -0.02 |
| 7S2 | -12733.20 | 10748.87 | -6401.91 | 2636.32 | -715.14 | 115.08 | -8.33 |

Therefore, a basic parameter of the optical system of the camera lens according to the sixth embodiment of this application that is manufactured and designed by using the foregoing parameters is recorded in the following Table 6C. In Table 6C, "F#" is an F value (a quantity of apertures) of the optical system of the camera lens. "EFL" is an effective focal length when the optical system of the camera lens performs focusing in a case in which the focus distance is infinity. "EF1" is an effective focal length of the first group of lenses G1. "TTL" is a total track length of the optical system of the camera lens during focusing in a case in which the focus distance is infinity. "IMH" is a maximum radius (a maximum half image height) of an imaging circle on the image plane P. "△" is a focusing stroke of the first group of lenses G1. "D1" is a maximum value of maximum effective diameters of all lenses in the first group of lenses G1. "D2" is a minimum value of maximum effective diameters of all lenses in the second group of lenses G2.

**[Table 6C]**

| F# | 2.3 |
|---|---|
| EFL | 4.56 |
| IMH | 3.90 |
| TTL | 5.55 |
| △ | 0.15 |
| △/TTL | 0.03 |
| TTL/IMH | 1.42 |
| EFL/IMH | 1.17 |
| D2/D1 | 1.38 |
| EFL1/EFL | 0.93 |

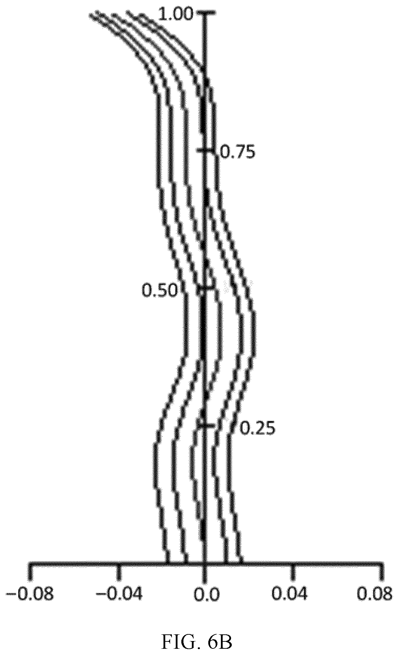

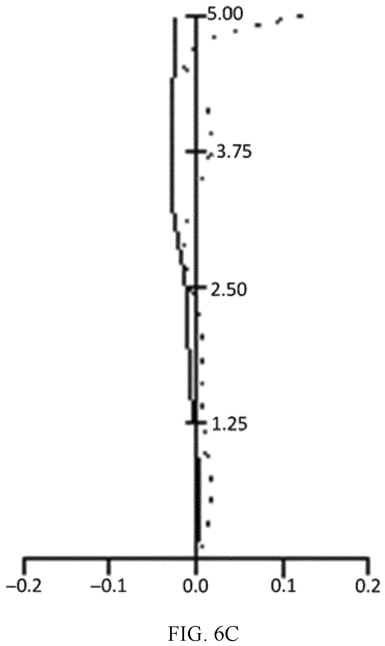

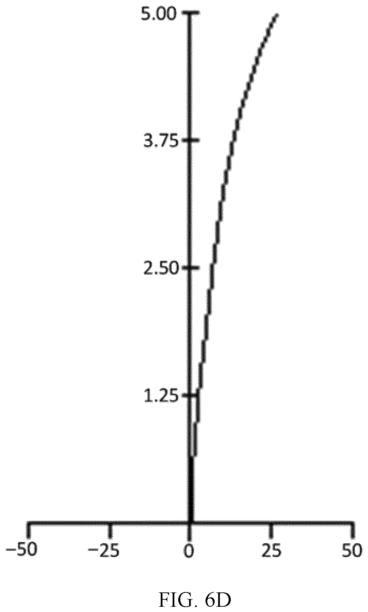

By using the foregoing solution, the optical system of the camera lens according to the sixth embodiment of this application can be obtained. In FIG. 6B to FIG. 6D, a spherical chromatic aberration diagram, an astigmatism diagram and a distortion diagram of the optical system are shown. As shown in FIG. 6B, curves in the spherical chromatic aberration diagram represent values of spherical aberrations of light with different wavelengths (center wavelengths are 650 nm, 610 nm, 555 nm, 510 nm, and 470 nm) passing through the vertical axis of the optical system, and represent deviations of focusing points after the light ray passes through the optical imaging system. In FIG. 6B, a horizontal coordinate is an offset (unit: mm), and a vertical coordinate is a normalized value. As shown in FIG. 6C, a solid line in the astigmatism diagram indicates a bending degree of light with a center wavelength (555 nm) on a meridian image plane, and a dashed line indicates a bending degree of light with a center wavelength (555 nm) on an arc vector image plane. A horizontal coordinate is the bending degree (unit: mm), and a vertical coordinate is a field of view (unit: degree). As shown in FIG. 6D, a solid line in the distortion diagram indicates a distortion value of light with a center wavelength (555 nm) passing through the optical system, and indicates distortion magnitudes in different field of view cases. A horizontal coordinate is a distortion value, a value of the distortion value is a percentage, and a vertical coordinate is a field of view (unit: degree).

The foregoing content describes example embodiments and related variations of specific implementations of this application, and the following provides supplementary descriptions.

i. In the table described in the foregoing specific implementations, in Table 1A, Table 1B, Table 2A, Table 2B, Table 3A, Table 3B, Table 4A, Table 4B, Table 5A, Table 5B, Table 6A, and Table 6B, corresponding to a column in which a "surface number" is located, S1 indicates a surface that is of an optical component and that is close to the object side, and S2 indicates a surface that is of the optical component and that is close to the image side. For example, "1S1" indicates a surface that is of the first lens 1 and that is close to the object side, and "1S2" indicates a surface that is of the first lens 1 and that is close to the image side.

ii. In the foregoing specific implementation, an object distance corresponding to a minimum macro distance may be, for example, 120 mm.

iii. The lens in the camera lens according to this application not only may be made of optical plastic, but also may be made of optical glass.

iv. This application further provides a camera module, where the camera module includes a photosensitive element and the camera lens described in the foregoing specific embodiments, and the photosensitive element is located on an image side of the camera lens. The camera lens is configured to receive a light ray reflected by a photographed object and project the light ray to the photosensitive element, and the photosensitive element is configured to convert the light ray into an image signal. This application further provides an electronic device. The electronic device includes the foregoing camera module. The electronic device may be a mobile phone, a tablet computer, a laptop computer, a monitor, or the like.

Although this application is described with reference to embodiments herein, in a process of implementing this application that claims protection, a person skilled in the art may understand and implement another variation of the disclosed embodiments by viewing the accompanying drawings, disclosed content, and the accompanying claims. In the claims, "comprising" does not exclude another component or another step, and "a" or "one" does not exclude a meaning of plurality. Some measures are recorded in dependent claims that are different from each other, but this does not mean that these measures cannot be combined to produce a better effect.

Embodiments of this application are described above. The foregoing descriptions are examples, are not exhaustive, and are not limited to the disclosed embodiments. Many modifications and changes are clear to a person of ordinary skill in the art without departing from the scope and spirit of the described embodiments. The selection of terms used in this specification is intended to best explain the principles of embodiments, practical application, or improvements to technologies in the market, or to enable another person of ordinary skill in the art to understand embodiments disclosed in this specification.

**Claims**

1. A camera lens, wherein the camera lens comprises a first group of lenses and a second group of lenses that are sequentially arranged along an optical axis direction from an object side to an image side, the first group of lenses can move along the optical axis direction, and the second group of lenses are fastened;

   in a process in which a focus distance of the camera lens is switched from infinity to a minimum macro distance, the first group of lenses move towards the object side along the optical axis direction, and a moving stroke $\triangle$ of the first group of lenses and a total track length TTL of the camera lens meet $\triangle/\mathrm{TTL}\leq0.2$; and
   the total track length TTL of the camera lens and a maximum half image height IMH of the camera lens meet $0.5\leq\mathrm{TTL/IMH}\leq2$.

2. The camera lens according to claim 1, wherein the camera lens has N lenses, the first group of lenses comprise N1 lenses, the second group of lenses comprise N2 lenses, $7\leq N\leq10$, $4\leq N1\leq7$, and $1\leq N2\leq4$.

3. The camera lens according to claim 1 or 2, wherein an effective focal length EFL of the camera lens and the maximum half image height IMH of the camera lens meet $1\leq\mathrm{EFL/IMH}\leq2$.

4. The camera lens according to any one of claims 1 to 3, wherein the first group of lenses have a positive focal power, and an effective focal length EFL1 of the first group of lenses and the effective focal length EFL of the camera lens meet $0.5\leq\mathrm{EFL1/EFL}\leq2$.

5. The camera lens according to any one of claims 1 to 4, wherein a first lens most close to the object side in the first group of lenses has a positive focal power, the first group of lenses further comprise a second lens adjacent to the first lens, a part close to an optical axis of an object side surface of the second lens protrudes towards the object side, and a part close to an optical axis of an image side surface of the second lens recesses towards the object side.

6. The camera lens according to any one of claims 1 to 5, wherein a part close to an optical axis of an object side surface of one of two lenses most close to the image side in the first group of lenses protrudes towards the object side.

7. The camera lens according to any one of claims 1 to 6, wherein an F number F# of the camera lens meets F#≤3.5.

8. The camera lens according to any one of claims 1 to 7, wherein a maximum value D1 of maximum effective diameters of lenses in the first group of lenses and a minimum value D2 of maximum effective diameters of lenses in the second group of lenses meet 1≤D2/D1≤3.

9. The camera lens according to any one of claims 1 to 8, wherein a lens of the camera lens is made of optical plastic or optical glass.

10. A camera module, comprising a photosensitive element and the camera lens according to any one of claims 1 to 9, wherein the photosensitive element is located on an image side of the camera lens, the camera lens is configured to receive a light ray reflected by a photographed object and project the light ray to the photosensitive element, and the photosensitive element is configured to convert the light ray into an image signal.

11. An electronic device, comprising a housing and the camera module according to claim 10, wherein the camera module is mounted on the housing.

FIG. 1A

FIG. 1C

FIG. 1D

FIG. 2A

FIG. 2B

FIG. 2C

FIG. 2D

FIG. 3A

FIG. 3B

FIG. 3C

FIG. 3D

FIG. 4A

FIG. 4B

FIG. 4C

FIG. 4D

FIG. 5A

FIG. 5B

FIG. 5C

FIG. 5D

FIG. 6A

FIG. 6B

FIG. 6C

FIG. 6D

## INTERNATIONAL SEARCH REPORT

International application No.

**PCT/CN2022/106809**

### A. CLASSIFICATION OF SUBJECT MATTER

G02B 13/00(2006.01)i;  G02B 13/18(2006.01)i;  H04N 5/225(2006.01)i

According to International Patent Classification (IPC) or to both national classification and IPC

### B. FIELDS SEARCHED

Minimum documentation searched (classification system followed by classification symbols)

G02B13/-;  H04N5/-

Documentation searched other than minimum documentation to the extent that such documents are included in the fields searched

Electronic data base consulted during the international search (name of data base and, where practicable, search terms used)

CNTXT; CNABS; CNKI: 透镜, 移动, 运动, 改变, 位置, 固定, 不动, 变焦, 变倍, 调焦, 光学总长, ttl, ih, imh, 像高 VEN; DWPI; USTXT; WOTXT; EPTXT; IEEE: lens, move, movement, motion, location, position, fixed, still, image height, total track length, focus, zoom

### C. DOCUMENTS CONSIDERED TO BE RELEVANT

| Category* | Citation of document, with indication, where appropriate, of the relevant passages | Relevant to claim No. |
|---|---|---|
| X | CN 111812805 A (NANCHANG O-FILM TECHNOLOGY CO., LTD.) 23 October 2020 (2020-10-23)<br>description, page 4, line 23-page 6, line 12; page 8, 4th-to-last line-page 9, line 2; page 28 8th-to-last line-last line; table 4; and figure 1) | 1-11 |
| A | CN 104181679 A (TAMRON CO., LTD.) 03 December 2014 (2014-12-03)<br>entire document | 1-11 |
| A | CN 110402407 A (FUJIFILM CORP.) 01 November 2019 (2019-11-01)<br>entire document | 1-11 |
| A | CN 103003734 A (KONICA MINOLTA OPTO, INC.) 27 March 2013 (2013-03-27)<br>entire document | 1-11 |
| A | JP 2020086323 A (TAMRON K. K.) 04 June 2020 (2020-06-04)<br>entire document | 1-11 |
| A | US 2013222925 A1 (PENTAX RICOH IMAGING CO., LTD.) 29 August 2013 (2013-08-29)<br>entire document | 1-11 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 September 2022** | **17 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/106809**

| Patent document cited in search report | | | Publication date (day/month/year) | Patent family member(s) | | | Publication date (day/month/year) |
|---|---|---|---|---|---|---|---|
| CN | 111812805 | A | 23 October 2020 | TW | 202107142 | A | 16 February 2021 |
| | | | | EP | 3772668 | A1 | 10 February 2021 |
| | | | | US | 2021041666 | A1 | 11 February 2021 |
| | | | | KR | 20210018782 | A | 18 February 2021 |
| | | | | JP | 6650068 | B1 | 19 February 2020 |
| | | | | CN | 111812805 | B | 17 June 2022 |
| | | | | JP | 2021026143 | A | 22 February 2021 |
| CN | 104181679 | A | 03 December 2014 | US | 2014347545 | A1 | 27 November 2014 |
| | | | | JP | 2014228808 | A | 08 December 2014 |
| | | | | US | 9507169 | B2 | 29 November 2016 |
| | | | | CN | 104181679 | B | 11 January 2017 |
| | | | | JP | 6377320 | B2 | 22 August 2018 |
| CN | 110402407 | A | 01 November 2019 | JP | 2018155776 | A | 04 October 2018 |
| | | | | WO | 2018168557 | A1 | 20 September 2018 |
| | | | | US | 2020003991 | A1 | 02 January 2020 |
| | | | | JP | 6611745 | B2 | 27 November 2019 |
| | | | | CN | 110402407 | B | 07 May 2021 |
| | | | | US | 11009676 | B2 | 18 May 2021 |
| CN | 103003734 | A | 27 March 2013 | WO | 2011118554 | A1 | 29 September 2011 |
| | | | | US | 2013016278 | A1 | 17 January 2013 |
| | | | | JP | WO2011118554 | A1 | 04 July 2013 |
| | | | | CN | 103003734 | B | 20 January 2016 |
| | | | | US | 8917457 | B2 | 23 December 2014 |
| JP | 2020086323 | A | 04 June 2020 | | None | | |
| US | 2013222925 | A1 | 29 August 2013 | US | 9201219 | B2 | 01 December 2015 |
| | | | | JP | 2013178365 | A | 09 September 2013 |
| | | | | JP | 5831291 | B2 | 09 December 2015 |
| | | | | JP | 2016014905 | A | 28 January 2016 |
| | | | | JP | 6044694 | B2 | 14 December 2016 |
| | | | | JP | 6123281 | B2 | 10 May 2017 |
| | | | | JP | 2013210604 | A | 10 October 2013 |

Form PCT/ISA/210 (patent family annex) (January 2015)

**EP 4 357 831 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110872362X